# EUROPÄISCHE PATENTSCHRIFT

(11) **EP 3 324 875 B1**
(45) Veröffentlichungstag und Bekanntmachung des Hinweises auf die Patenterteilung: **28.11.2018**
(21) Anmeldenummer: 17731914.2
(22) Anmeldetag: 22.06.2017
(51) Int. Cl.: A61C 1/00, A61C 17/02, A61C 19/00

(54) **ZAHNÄRZTLICHE BEHANDLUNGS- UND/ODER UNTERSUCHUNGSANORDNUNG, ZAHNÄRZTLICHE KUPPLUNGSEINHEIT SOWIE VERFAHREN ZUM SPÜLEN DES FLÜSSIGKEITSFÜHRENDEN SYSTEMS EINER ZAHNÄRZTLICHEN BEHANDLUNGS- UND/ODER UNTERSUCHUNGSANORDNUNG**
DENTAL TREATMENT AND/OR EXAMINATION ASSEMBLY, DENTAL COUPLING UNIT AND METHOD FOR RINSING THE LIQUID PUMPING SYSTEM OF A DENTAL TREATMENT AND/OR EXAMINATION ASSEMBLY
SYSTÈME D'ANALYSE ET/OU DE TRAITEMENT DENTAIRE, UNITÉ D'ACCOUPLEMENT DENTAIRE ET PROCÉDÉ DE RINÇAGE DU SYSTÈME DE TRANSPORT DE LIQUIDE D'UN SYSTÈME D'ANALYSE ET/OU DE TRAITEMENT DENTAIRE

(30) Priorität: 22.06.2016 EP 16175632
(43) Veröffentlichungstag der Anmeldung: 30.05.2018
(73) Patentinhaber: Kaltenbach & Voigt GmbH, 88400 Biberach (DE)
(72) Erfinder: MOESSLANG, Hubert, 89610 Oberdischingen (DE); EBERLE, Jörg, 89134 Blaustein (DE)
(74) Vertreter: Thun, Clemens
(86) Internationale Anmeldenummer: PCT/EP2017/065422
(87) Internationale Veröffentlichungsnummer: WO 2017/220731

(56) Entgegenhaltungen:
- EP-A2- 0 323 598
- WO-A1-2016/102524
- DE-A1- 19 714 466
- JP-A- S6 297 548

## Beschreibung

Die Erfindung betrifft eine zahnärztliche Behandlungs- und/oder Untersuchungsanordnung mit einer Kupplungseinheit, die an ihrem vorderen Ende mit einem Instrumentenaufsatz koppelbar ist und einer Versorgungseinheit zur Bereitstellung von Versorgungsmedien für den Instrumentenaufsatz. Weiterhin umfasst die Erfindung eine entsprechende Kupplungseinheit sowie ein Verfahren zum Spülen des flüssigkeitsführenden Systems einer entsprechenden Behandlungs- und/oder Untersuchungsanordnung.

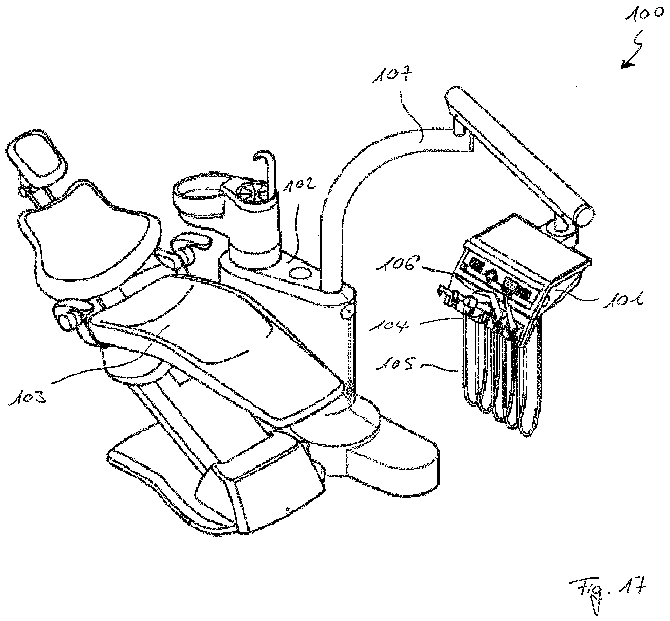

Fig. 17 zeigt eine Skizze eines Beispiels einer zahnärztlichen Behandlungseinheit 100 als Beispiel einer zahnärztlichen Behandlungs- und/oder Untersuchungsanordnung. Im Folgenden wird hier diese Behandlungs- und/oder Untersuchungsanordnung auch kurz als "Anordnung" bezeichnet. Die Anordnung 100 umfasst unter anderem ein so genanntes Arztelement 101, das schwenkbar gegenüber einem Basisteil 102 der Anordnung 100 angeordnet ist, sowie einen Patientenstuhl 103.

Das Basisteil 102 kann insbesondere dafür vorgesehen sein, zum Betrieb der Anordnung 100 auf eine Bodenfläche eines Raumes gestellt zu werden. Weiterhin umfasst die Anordnung 100 vorzugsweise eine Schwenkstangen-Anordnung 107, die einerseits mit dem Basisteil 102 verbunden ist und andererseits mit dem Arztelement 101, wobei das Arztelement 101 durch die Schwenkstangen-Anordnung 107 mit dem Basiselement 102 schwenkbar verbunden ist.

Das Arztelement 101 dient zur Halterung eines Instrumentenaufsatzes 104, bei dem es sich beispielsweise um ein Handstück, ein Winkelstück, eine Turbine oder ein Zahnsteinentfernungsgerät handeln kann. Der Instrumentenaufsatz 104 ist in erster Näherung länglich gestaltet, so dass er ein vorderes Ende 106 und ein rückwärtiges Ende aufweist. Der Instrumentenaufsatz 104 weist dabei eine Medienleitung für ein Betriebsmedium oder kurz Medium auf, beispielsweise eine Flüssigkeit, insbesondere Wasser. Die Medienleitung des Instrumentenaufsatzes 104 kann insbesondere an dem vorderen Ende 106 des Instrumentenaufsatzes 104 nach außen offen gestaltet sein, so dass das betreffende Medium bei einem Arbeiten mit dem Instrumentenaufsatz 104 an eine entsprechende Arbeitsstelle abgegeben werden kann.

Zur Bereitstellung des Mediums dient eine Versorgungseinheit, wobei eine entsprechende Medienzuführleitung dazu dient, das Medium von der Versorgungseinheit zu dem Instrumentenaufsatz 104 zu leiten. Der Instrumentenaufsatz 104 ist über einen flexiblen bzw. verformbaren Instrumenten- oder Versorgungsschlauch 105 mit einem weiteren Element der Anordnung 100, beispielsweise dem Arztelement 101 verbunden, wobei die Medienzuführleitung sich durch den Versorgungsschlauch 105 hindurch erstreckend angeordnet ist und insbesondere auch entlang der bzw. durch die Schwenkstangen-Anordnung 107. Allgemeiner dient der Instrumentenaufsatz 104 zur zahnärztlichen Behandlung und/oder Untersuchung.

Zum Verbinden bzw. Koppeln des Instrumentenaufsatzes 104 mit dem Versorgungsschlauch 105 dient eine Kupplungseinheit, die ein hinteres Ende aufweist, das mit dem Versorgungsschlauch 105 verbunden ist, beispielsweise reversibel lösbar oder aber auch fest bzw. dauerhaft. An ihrem vorderen Ende weist die Kupplungseinheit ein Kupplungselement auf, das unmittelbar mit dem Instrumentenaufsatz 104 verbunden werden kann. Insbesondere kann das Kupplungselement der Kupplungseinheit ein Kupplungszapfen sein, auf den der Instrumentenaufsatz 104 aufgesteckt bzw. aufgesetzt werden kann. Im verbundenen bzw. aufgesteckten Zustand ist der Instrumentenaufsatz 104 betriebsbereit mit der Kupplungseinheit verbunden; das Medium, also beispielsweise das Wasser kann in diesem Zustand aus der Medienzuführleitung kommend in den Instrumentenaufsatz 104 bzw. in die Medienleitung des Instrumentenaufsatzes 104 strömen. Die Medienzuführleitung erstreckt sich dabei durch die Kupplungseinheit zu dem Instrumentenaufsatz 104 hin bzw. zu dem vorderen Ende der Kupplungseinheit.

An dem weiteren Element der Anordnung, mit dem der Versorgungsschlauch 105 verbunden ist, also beispielsweise dem Arztelement 101, befindet sich eine beispielsweise köcherartige Halterung zum Halten der Kupplungseinheit. Die Kupplungseinheit kann mit dem aufgesteckten Instrumentenaufsatz aus der Halterung entnommen werden und von dem weiteren Element der Anordnung bzw. dem Arztelement 101 wegbewegt werden, insbesondere zu einer Arbeitsstelle, wobei sich der Versorgungsschlauch 105 entsprechend verformt. Nach einem Arbeiten mit dem Instrumentenaufsatz 104 kann Letzterer zusammen mit der Kupplungseinheit wieder in die Halterung zurück verbracht werden.

Nach einer Behandlung kann der Instrumentenaufsatz von der Kupplungseinheit getrennt werden, insbesondere durch ein Abziehen von dem Kupplungszapfen. Dieses Trennen des Instrumentenaufsatzes 104 von der Kupplungseinheit nach der Arbeit wird in der zahnärztlichen Praxis üblicherweise durchgeführt, beispielsweise nach einer Behandlung eines Patienten.

Durch die Medienzuführleitung wird also im Allgemeinen während der Arbeit mit dem Instrumentenaufsatz 104 das Medium bzw. die Flüssigkeit, also beispielsweise das Wasser hindurch geleitet; somit stellt die Medienzuführleitung Teil eines flüssigkeitsführenden bzw. wasserführenden Systems der Behandlungseinheit 100 dar.

In der Regel weist eine Behandlungseinheit mehrere entsprechende Kupplungseinheiten und dementsprechend mehreren Versorgungsschläuche auf, wobei jede der Kupplungseinheiten mit einem der Versorgungsschläuche entsprechend verbunden ist und alle Versorgungsschläuche andererseits mit dem weiteren Element der Anordnung bzw. dem Arztelement 101 verbunden sind.

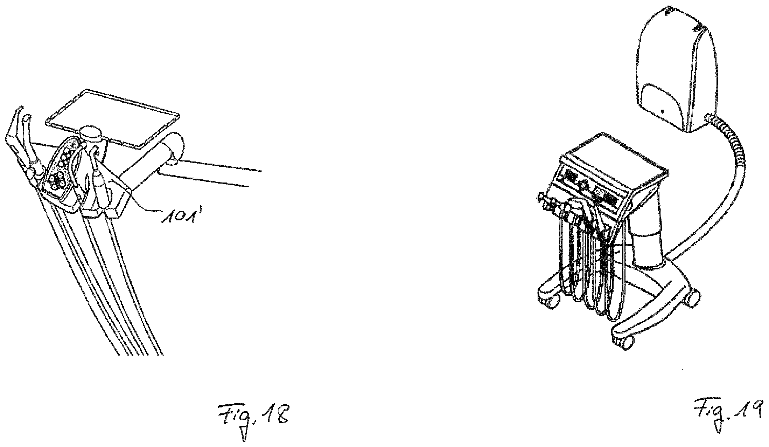

Alternativ kann - wie in Fig. 18 skizziert - anstelle des Arztelements 101 ein so genanntes Assistenzelement 101' dienen. Weiterhin alternativ kann das Arztelement - wie in Fig. 19 skizziert - als Cart-Version gestaltet sein, also nicht über eine bzw. die Schwenkstangen-Anordnung 107 mit dem Basisteil 102 verbunden sein. Im Fall der Cart-Version erstreckt sich die Medienzuführleitung natürlich nicht durch die Schwenkstangen-Anordnung.

In der Zahnheilkunde bestehen für Patienten und die in diesem Bereich Tätigen aufgrund der Besonderheiten der zahnärztlichen Behandlung verschiedene Infektionsrisiken. Daher soll eine zahnärztliche Behandlungs- und/oder Untersuchungsanordnung geeigneten hygienischen Anforderungen entsprechen. Dies betrifft unter anderem das erwähnte wasserführende bzw. flüssigkeitsführende System. In Deutschland darf gemäß § 3 der Trinkwasserverordnung (TrinkwV) in zahnärztliche Behandlungseinheiten nur Wasser eingespeist werden, das den Anforderungen dieser Verordnung entspricht. Allerdings werden auch bei Einhaltung dieses Standards die wasserführenden Systeme von dentalen Behandlungseinheiten häufig durch unterschiedliche Mikroorganismen besiedelt.

Entsprechende Empfehlungen mit Bezug auf die Hygiene finden sich beispielsweise in der Schrift "Infektionsprävention in der Zahnheilkunde - Anforderungen an die Hygiene; Mitteilung der Kommission für Krankenhaushygiene und Infektionsprävention beim Robert Koch-Institut".

Um eine geeignete mikrobiologische Qualität des Wassers zu gewährleisten, sollte eine Koloniezahl von 100 / mL nicht überschritten werden. Dies geht aus der zuletzt genannten Schrift unter Punkt 5 "Wasser führende Systeme" in Verbindung mit § 3 der TrinkwV hervor. Um dies zu gewährleisten, sollen Desinfektionsanlagen in Behandlungseinheiten eingebaut werden und die wasserführenden Systeme jeden Morgen sowie nach jeder Behandlung eines Patienten gespült werden.

Um ein Aufkeimen des flüssigkeitsführenden Systems während einer Stillstandzeit zu verhindern, ist es bekannt, eine Behandlungseinheit mit einem Entkeimungsproramm auszugestalten. Dieses Programm stellt einen teilautomatisierten Vorgang dar, bei dem die Versorgungsschläuche in entsprechende Adapter gesteckt werden müssen. Dieses Stecken wird manuell durchgeführt und erfordert daher einen entsprechend hohen Zeitaufwand; zudem ist hierbei die Zugänglichkeit zu den Adaptern oft eingeschränkt. Außerdem erfordert eine entsprechende Spüleinrichtung erheblichen Raum. Auch die Dokumentation der durchgeführten Spülung bzw. Entkeimung ist aufwändig und schwierig; ein lückenloser Nachweis im Sinn eines Qualitätsmanagements lässt sich hierbei in der Praxis kaum erreichen.

Aus der EP 0 323 598 A2 ist ein Gerät zum Entfernen von Zahnstein und zum Spülen bekannt. Das Gerät umfasst eine Grundeinheit, von der aus sich eine Leitung zu einem Handstück erstreckt. Durch die Leitung kann Kühlwasser zu dem Handstück geleitet werden. Das Handstück ist andererseits mit einem Einsatz verbunden, in dem eine, nach vorne ausmündende Leitung für eine Spülsubstanz ausgebildet ist.

Aus der DE 197 14 466 A1 ist ein Dentalmotor mit einem Stator und einem Rotor bekannt. Zur Kühlung dienen zwei Kühlkanäle, die sich spiralförmig um den Stator erstrecken. Am vorderen Ende sind die beiden Kühlkanäle miteinander über einen Umlenkkanal verbunden.

Die WO 2016/102524 A1, die Stand der Technik gemäß Artikel 54 (3) EPÜ darstellt, zeigt zahnärztliches Hand- oder Winkelstück mit einer Antriebseinheit und einem damit verbindbaren Gehäuse. Die Antriebseinheit weist eine erste Fluidleitung und eine zweite Fluidleitung auf. In dem Gehäuse ist eine Leitung ausgebildet, die die beiden genannten Fluidleitungen der Antriebseinheit miteinander verbindet, wenn das Gehäuse wie vorgesehen mit der Antriebseinheit verbunden ist.

Der Erfindung liegt die Aufgabe zugrunde, eine entsprechende verbesserte zahnärztliche Behandlungs- und/oder Untersuchungsanordnung anzugeben; dabei soll sich die Anordnung für eine einfach durchzuführende Aufbereitung bzw. Spülung der Medienzuführleitung der Anordnung eignen, insbesondere bei automatisierbarem Ablauf und geeigneter Dokumentationsmöglichkeit. Weiterhin soll eine Kupplungseinheit einer entsprechenden Behandlungs- und/oder Untersuchungsanordnung angegeben werden, die eine derartige Aufbereitung erleichtert, sowie ein verbessertes Verfahren zum Spülen des flüssigkeitsführenden Systems einer entsprechenden Behandlungs- und/oder Untersuchungsanordnung.

Diese Aufgabe wird gemäß der Erfindung mit den in den unabhängigen Ansprüchen genannten Gegenständen gelöst. Besondere Ausführungsarten der Erfindung sind in den abhängigen Ansprüchen angegeben.

Gemäß der Erfindung ist eine zahnärztliche Kupplungseinheit vorgesehen, welche an ihrem vorderen Ende lösbar mit einem Instrumentenaufsatz zur zahnärztlichen Behandlung und/oder Untersuchung koppelbar ist und welche ferner mit einer Versorgungseinheit zur Bereitstellung von Versorgungsmedien für den Instrumentenaufsatz verbindbar ist, wobei die Versorgungsmedien zumindest eine Flüssigkeit umfassen. Dabei erstreckt sich durch die Kupplungseinheit zu dem Instrumentenaufsatz hin eine Medienzuführleitung für die Flüssigkeit; zusätzlich erstreckt sich eine Medienrückführleitung durch die Kupplungseinheit, welche mit einem dem Instrumentenaufsatz zugewandten Endbereich der sich durch die Kupplungseinheit erstreckenden Medienzuführleitung verbunden ist. Die Kupplungseinheit weist eine Ventilanordnung auf, welche in einem aufgesetzten Zustand des Instrumentenaufsatzes die Flüssigkeit von der Kupplungseinheit zu dem Instrumentenaufsatz leitet und in einem nicht aufgesetzten Zustand des Instrumentenaufsatzes die Flüssigkeit zu der Medienrückführleitung leitet und ein Austreten der Flüssigkeit am vorderen Ende der Kupplungseinheit versperrt.

Vorzugsweise handelt es sich bei der Flüssigkeit um Wasser, behandeltes Wasser oder eine medizinische oder eine chemische Flüssigkeit.

Gemäß einem weiteren Aspekt der Erfindung ist eine zahnärztliche Behandlungs- und/oder Untersuchungsanordnung vorgesehen, die eine anmeldungsgemäße zahnärztliche Kupplungseinheit aufweist. Weiterhin weist die Behandlungs- und/oder Untersuchungsanordnung die Versorgungseinheit auf, wobei sich die Medienzuführleitung von der Versorgungseinheit durch die Kupplungseinheit zu dem Instrumentenaufsatz hin erstreckt. Dabei weist die zahnärztliche Behandlungs- und/oder Untersuchungsanordnung weiterhin Mittel zum selektiven Freischalten eines Flusses der Flüssigkeit durch die Medienzuführleitung und die Medienrückführleitung auf, wobei diese Mittel zum selektiven Freischalten die Ventilanordnung umfassen. Durch die Medienrückführleitung lässt sich die Medienzuführleitung besonders geeignet, insbesondere mit besonders geringem Aufwand und dabei für eine automatisierte Durchführung geeignet mit der Flüssigkeit spülen.

Da die Kupplungseinheit die Ventilanordnung aufweist, welche in einem nicht aufgesetzten Zustand des Instrumentenaufsatzes an der Kupplungseinheit ein Austreten der Flüssigkeit am vorderen Ende aus der Kupplungseinheit versperrt, eignet sich die Anordnung besonders für eine automatische Durchführung des Spülvorgangs.

Vorzugsweise umfassen die Mittel zum selektiven Freischalten ferner ein Ventil, das im Bereich der Medienrückführleitung angeordnet ist. Hierdurch lassen sich die Mittel besonders einfach steuern.

Gemäß einem weiteren Aspekt der Erfindung ist eine zahnärztliche Behandlungs- und/oder Untersuchungsanordnung mit einer zahnärztlichen Kupplungseinheit vorgesehen, welche an ihrem vorderen Ende lösbar mit einem Instrumentenaufsatz zur zahnärztlichen Behandlung und/oder Untersuchung koppelbar ist. Weiterhin weist die Anordnung eine Versorgungseinheit zur Bereitstellung von Versorgungsmedien für den Instrumentenaufsatz auf, wobei die Versorgungsmedien zumindest eine Flüssigkeit umfassen, sowie eine sich von der Versorgungseinheit durch die Kupplungseinheit zu dem Instrumentenaufsatz hin erstreckende Medienzuführleitung für die Flüssigkeit. Weiterhin weist die Anordnung eine Medienrückführleitung auf, welche mit einem dem Instrumentenaufsatz zugewandten Endbereich der sich durch die Kupplungseinheit erstreckenden Medienzuführleitung verbindbar ist, wobei die zahnärztliche Behandlungs- und/oder Untersuchungsanordnung weiterhin Mittel zum selektiven Freischalten eines Flusses der Flüssigkeit durch die Medienzuführleitung und die Medienrückführleitung aufweist. Weiterhin weist die Anordnung einen Spüladapter auf, der im nicht aufgesetzten Zustand des Instrumentenaufsatzes an der Kupplungseinheit mit dieser koppelbar ist, wobei sich von dem Spüladapter ausgehend die Medienrückführleitung erstreckt, welche im gekoppelten Zustand zwischen Spüladapter und Kupplungseinheit mit der sich durch die Kupplungseinheit erstreckenden Medienzuführleitung verbunden ist. Dabei weist der Spüladapter Aufnahmen für Adaptereinsätze auf, welche jeweils zur Kopplung mit einer Kupplungseinheit ausgebildet sind, wobei die Adaptereinsätze in den Aufnahmen frei positionierbar sind.

Hierdurch ist eine besonders einfache Handhabung zur Vorbereitung des Spülvorgangs ermöglicht.

Vorzugsweise ist dabei der Spüladapter an einem Arzt- oder Assistenzelement der Behandlungs- und/oder Untersuchungsanordnung angeordnet. So lässt sich der Weg der Kupplungseinheit von ihrer Halterung am Arzt- oder Assistenzelement zum Spüladapter besonders kurz gestalten.

Dadurch, dass der Spüladapter Aufnahmen für Adaptereinsätze aufweist, welche jeweils zur Kopplung mit einer bzw. der Kupplungseinheit ausgebildet sind, wobei die Adaptereinsätze in den Aufnahmen frei positionierbar sind, ist eine besonders vorteilhafte räumliche Anordnung ermöglicht.

Vorzugsweise weist der Spüladapter zusätzlich eine Zuleitung für ein Pflege-, Reinigungs- oder Desinfektionsmittel auf. Dies ist beispielsweise besonders vorteilhaft mit Bezug auf eine Pflege bzw. Desinfektion eines O-Rings der Kupplungseinheit.

Vorzugsweise ist die Versorgungseinheit dazu ausgebildet, die Medienzuführleitung und die Medienrückführleitung mit der Flüssigkeit zu spülen. Dies ist vorteilhaft mit Bezug auf den Ablauf beim Spülvorgang.

Vorzugsweise ist die Anordnung derart gestaltet, dass die Versorgungseinheit die Flüssigkeit zum Spülen für einen vorgegebenen Zeitraum abgibt oder eine vorgegebene Menge der Flüssigkeit abgibt. So lässt sich der Spülvorgang besonders geeignet überprüfbar bzw. dokumentierbar gestalten.

Vorzugsweise ist die Anordnung derart gestaltet, dass die Versorgungseinheit die Menge der zum Spülen abgegebenen Flüssigkeit überwacht. Hierdurch lässt sich der Spülvorgang insbesondere besonders sicher gestalten. Dies ist beispielsweise vorteilhaft mit Bezug auf die Qualitätssicherung.

Vorzugsweise erstreckt sich die Medienrückführleitung als Druckleitung bis zur Versorgungseinheit oder einer Entsorgungsstelle. So lässt sich ein besonders geeignetes Spülen der Medienzuführleitung bewirken.

Vorzugsweise ist die Anordnung derart gestaltet, dass die Versorgungseinheit in der Lage ist, den Typ des aufgesetzten Instruments bzw. Instrumentenaufsatzes zu erkennen.

Vorzugsweise handelt es sich bei dem Instrumentenaufsatz um ein Bohrhandstück, ein Zahnsteinentfernungsgerät oder ein zahnärztliches Spritzhandstück.

Vorzugsweise weist die zahnärztliche Behandlungs- und/oder Untersuchungsanordnung zusätzlich einen Versorgungsschlauch auf, über den die Kupplungseinheit lösbar oder fest mit der Versorgungseinheit verbunden ist, wobei sich die Medienzuführleitung und vorzugsweise auch die Medienrückführleitung durch den Versorgungsschlauch erstrecken.

Gemäß einem weiteren Aspekt der Erfindung ist ein Verfahren zum Spülen des flüssigkeitsführenden Systems einer zahnärztlichen Behandlungs- und/oder Untersuchungsanordnung vorgesehen, wobei die Behandlungs- und/oder Untersuchungsanordnung Folgendes aufweist: eine zahnärztliche Kupplungseinheit, welche an ihrem vorderen Ende lösbar mit einem Instrumentenaufsatz zur zahnärztlichen Behandlung und/oder Untersuchung koppelbar ist, eine Versorgungseinheit zur Bereitstellung von Versorgungsmedien für den Instrumentenaufsatz, wobei die Versorgungsmedien zumindest eine Flüssigkeit umfassen, sowie eine sich von der Versorgungseinheit durch die Kupplungseinheit zu dem Instrumentenaufsatz hin erstreckende Medienzuführleitung für die Flüssigkeit.

Das Verfahren weist die Schritte auf: a) Leiten der Flüssigkeit von der Kupplungseinheit zu dem Instrumentenaufsatz in einem aufgesetzten Zustand des Instrumentenaufsatzes an der Kupplungseinheit und b) Spülen der Flüssigkeit durch die Medienzuführleitung und eine damit verbundene Medienrückführleitung in einem nicht aufgesetzten Zustand des Instrumentenaufsatzes an der Kupplungseinheit.

Vorzugsweise erstreckt sich dabei die Medienrückführleitung, insbesondere als Druckleitung von einem Spüladapter ausgehend, mit dem die Kupplungseinheit in Schritt b) verbunden wird.

Vorzugsweise weist das Verfahren weiterhin den folgenden Schritt c) auf: Öffnen einer Ventilanordnung der Kupplungseinheit durch Aufsetzen des Instrumentenaufsatzes auf die Kupplungseinheit, wobei bei geöffneter Ventilanordnung die Medienzuführleitung leitend mit einer Medienleitung des Instrumentenaufsatzes verbunden ist.

Vorzugsweise weist das Verfahren weiterhin den folgenden Schritt d) auf: Schließen der Ventilanordnung durch Abziehen des Instrumentenaufsatzes von der Kupplungseinheit, wobei bei geschlossener Ventilanordnung ein Austreten der Flüssigkeit am vorderen Ende der Kupplungseinheit versperrt ist.

Vorzugsweise weist das Verfahren weiterhin den folgenden Schritt e) auf: Anlegen eines Überdrucks an die Medienzuführleitung, wobei vorzugsweise durch den angelegten Überdruck ein in der Medienrückführleitung angeordnetes Rückschlagventil geöffnet wird.

Die Erfindung wird im Folgenden anhand von Ausführungsbeispielen und mit Bezug auf die Zeichnungen näher erläutert. Es zeigen:
- Fig. 1: eine Skizze zu einem ersten Ausführungsbeispiel einer erfindungsgemäßen Anordnung, wobei die Instrumentenaufsätze auf die Kupplungseinheiten aufgesteckt sind,
- Fig. 2: eine entsprechende Skizze, wobei die Instrumentenaufsätze von den Kupplungseinheiten abgezogen sind,
- Fig. 3: eine schematische Skizze zu Medienleitungen einer Anordnung,
- Fig. 4: eine Kupplungseinheit mit Medienleitungen in einem Spülzustand,
- Fig. 5: die Kupplungseinheit in einem Zustand vor einer Behandlung,
- Fig. 6: die Kupplungseinheit während einer Behandlung,
- Fig. 7: eine Skizze zu einem Zustand der Anordnung kurz vor einer Behandlung,
- Fig. 8: eine Skizze zu einem Zustand der Anordnung während der Behandlung,
- Fig. 9: eine Skizze zu einem Zustand der Anordnung unmittelbar nach der Behandlung,
- Fig. 10: eine Skizze zu einem Zustand der Anordnung nach einer Behandlung während eines Spülprogramms,
- Fig. 11: eine Skizze der Anordnung unter Verwendung von Rückschlagventilen,
- Fig. 12: eine entsprechende Skizze der Anordnung unter Verwendung von Magnetventilen,
- Fig. 13: eine Skizze zu einem Spüladapter gemäß einem zweiten Ausführungsbeispiel,
- Fig. 14: eine weitere Skizze zu dem Spüladapters, wobei Adaptereinsätze des Spüladapters in separierter Anordnung gezeigt sind,
- Fig. 15: eine Skizze zu einer möglichen Anordnung des Spüladapters an einem Arzt- oder Assistenzelement der Anordnung,
- Fig. 16: eine der Fig. 15 entsprechende Skizze im Fall einer alternativen Ausführung des Arzt- oder Assistenzelements,
- Fig. 17: eine Skizze zu Elementen einer zahnärztlichen Behandlungs- und/oder Untersuchungsanordnung,
- Fig. 18: eine Skizze zu einer Variante mit einem Assistenz-Element,
- Fig. 19: eine Skizze zu einer Variante mit einer Cart-Version,
- Fig. 20: eine Skizze zu einer möglichen Gestaltung des Rückschlagventils am vorderen Endbereich der Kupplungseinheit und
- Fig. 21: eine Skizze zu einer weiteren möglichen Gestaltung dieses Ventils.

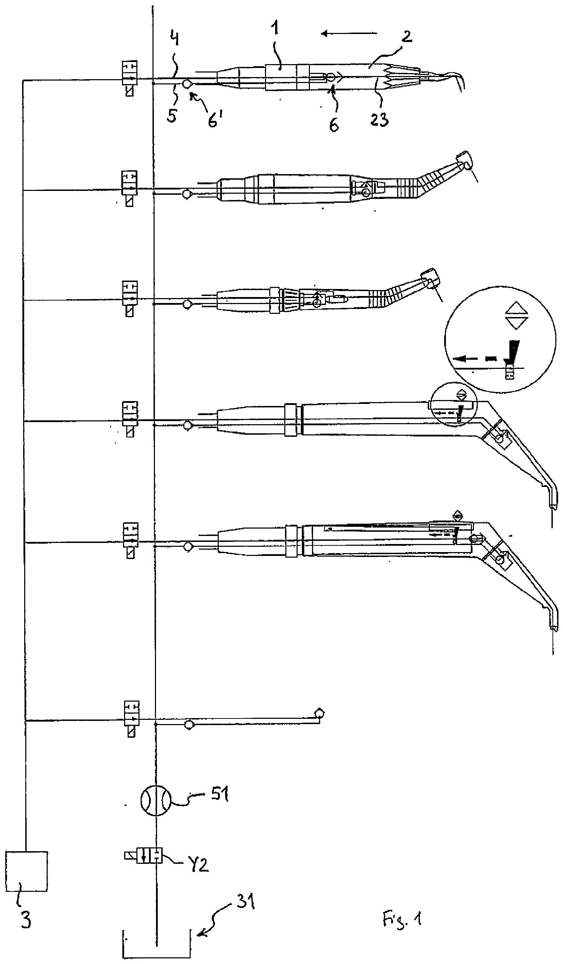

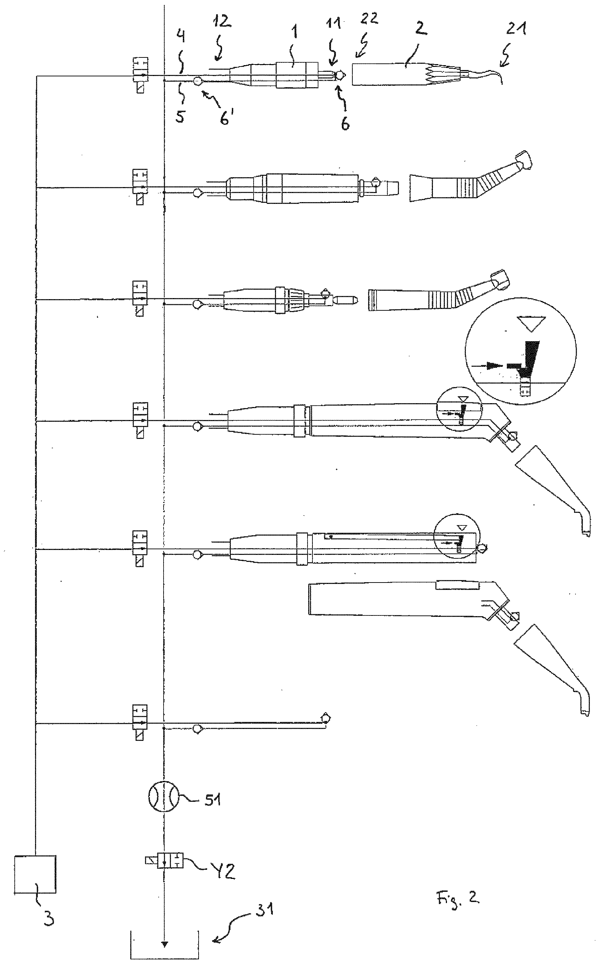

Figuren 1 und 2 zeigen schematische Skizzen zu einer erfindungsgemäßen zahnärztliche Behandlungs- und/oder Untersuchungsanordnung, hier kurz Anordnung. Soweit hier nicht anders angegeben, kann die Anordnung insbesondere entsprechend der obigen Beschreibung mit Bezug auf die Figuren 17 bis 19 gestaltet sein. Die Anordnung umfasst mithin eine zahnärztliche Kupplungseinheit 1, die einen vorderen Endbereich bzw. ein vorderes Ende 11 und einen rückwärtigen Endbereich bzw. ein rückwärtiges Ende 12 aufweist. An ihrem vorderen Ende 11 ist die Kupplungseinheit 1 lösbar mit einem Instrumentenaufsatz 2 für eine zahnärztliche Behandlung und/oder Untersuchung koppelbar bzw. verbindbar. Insbesondere kann die Kupplungseinheit 1 hierzu an ihrem vorderen Ende 11 einen Kupplungszapfen aufweisen, auf den der Instrumentenaufsatz 2 aufgesteckt bzw. aufgesetzt werden kann. Fig. 1 zeigt den Zustand bei aufgesetztem Instrumentenaufsatz 2, Fig. 2 den Zustand bei abgezogenem Instrumentenaufsatz 2.

Bei dem Instrumentenaufsatz 2 kann es sich beispielsweise um ein Bohrhandstück, ein Zahnsteinentfernungsgerät oder ein zahnärztliches Spritzhandstück handeln.

Beispielsweise kann die Anordnung - entsprechend der Skizze der Fig. 17 oder der Skizze der Fig. 19 - ein Arztelement 101 aufweisen, an dem eine Halterung, beispielsweise in Form eines Köchers oder einer Ablage für die Kupplungseinheit 1 ausgebildet ist. Alternativ kann die Halterung auch an einem so genannten Assistenzelement ausgebildet sein, wie beispielhaft in Fig. 18 gezeigt. Im Folgenden soll - der einfacheren Beschreibung halber - mit "Arztelement" allgemeiner ein Arzt- oder Assistenzelement bezeichnet sein.

Weiterhin umfasst die Anordnung eine Versorgungseinheit 3 zur Bereitstellung von Versorgungsmedien für den Instrumentenaufsatz 2, wobei die Versorgungsmedien zumindest eine Flüssigkeit, insbesondere Wasser umfassen. Bei der Flüssigkeit kann es sich beispielsweise um behandeltes Wasser oder eine medizinische oder eine chemische Flüssigkeit handeln, beispielsweise Wasser, dem ein Entkeimungsmittel beigesetzt ist.

Der Instrumentenaufsatz 2 ist in erster Näherung länglich, so dass er ein vorderes Ende 21 und ein rückwärtiges Ende 22 aufweist. Insbesondere kann der Instrumentenaufsatz 2 eine Medienleitung 23 aufweisen, die zur Leitung der Flüssigkeit dient, wobei die Medienleitung 23 des Instrumentenaufsatzes 2 vorzugsweise am vorderen Ende 22 des Instrumentenaufsatzes 2 nach außen führt, so dass das Medium bei einem Arbeiten mit dem Instrumentenaufsatz 2 auf eine Arbeitsstelle gerichtet abgegeben werden kann.

An ihrem rückwärtigen Ende 12 ist die Kupplungseinheit 1 mit einem biegbaren bzw. flexiblen Instrumenten- oder Versorgungsschlauch verbunden, beispielsweise in Form des in Fig. 17 mit dem Bezugszeichen 105 bezeichneten Schlauches. Die Kupplungseinheit 1 kann dabei lösbar, insbesondere reversibel lösbar oder fest mit dem Versorgungsschlauch 105 verbunden sein. Andererseits kann der Versorgungsschlauch 105 mit dem Arztelement 101 verbunden sein, an dem die Halterung für die Kupplungseinheit 1 ausgebildet ist. Beispielsweise kann sich der Versorgungsschlauch durch die in Fig. 17 gezeigte Schwenkstangen-Anordnung 107 hindurch erstrecken.

Durch den Versorgungsschlauch 105 hindurch erstreckt sich eine Medienzuführleitung 4, die sich von der Versorgungseinheit 3 durch die Kupplungseinheit 1 zu dem Instrumentenaufsatz 2 hin erstreckt bzw. bis an das vordere Ende 11 der Kupplungseinheit 1. Derjenige Abschnitt der Medienzuführleitung 4, der sich von dem rückwärtigen Ende 12 der Kupplungseinheit 1 bis zu dem vorderen Ende 11 der Kupplungseinheit 1 erstreckt, kann ein Bestandteil der Kupplungseinheit 1 sein. Die Medienzuführleitung 4 dient zur Zufuhr der Flüssigkeit zu dem Instrumentenaufsatz 2, insbesondere in die Medienleitung 23 des Instrumentenaufsatzes 2.

Weiterhin umfasst die Anordnung eine Medienrückführleitung 5, die mit einem dem Instrumentenaufsatz 2 zugewandten Endbereich der Medienzuführleitung 4 verbunden ist. Dabei weist die Anordnung weiterhin Mittel zum selektiven Freischalten eines Flusses der Flüssigkeit durch die Medienzuführleitung 4 und die Medienrückführleitung 5 auf.

Vorzugsweise erstreckt sich auch die Medienrückführleitung 5 durch den Versorgungsschlauch 105. Die Medienrückführleitung 5 kann sich zumindest teilweise durch die Kupplungseinheit 1 erstrecken. Insbesondere kann also die Kupplungseinheit 1 über den Versorgungsschlauch 105 lösbar oder fest mit der Versorgungseinheit 3 verbunden sein.

Derjenige Abschnitt der Medienrückführleitung 5, der sich von dem vorderen Ende 11 der Kupplungseinheit 1 bis zu dem rückwärtigen Ende 12 der Kupplungseinheit 1 erstreckt, kann ein Bestandteil der Kupplungseinheit 1 sein.

Die Kupplungseinheit 1 weist vorzugsweise eine Ventilanordnung 6 auf, die in einem nicht aufgesetzten Zustand des Instrumentenaufsatzes 2 an der Kupplungseinheit 1 ein Austreten der Flüssigkeit aus der Kupplungseinheit 1 versperrt.

Vorzugsweise umfassen die Mittel zum selektiven Freischalten ein Ventil Y2, das im Bereich der Medienrückführleitung 5 angeordnet ist.

Weiterhin vorzugsweise ist die Gestaltung derart, dass automatisch die Medienzuführleitung 4 die Flüssigkeit leitend mit der Medienleitung 23 des Instrumentenaufsatzes 2 verbunden ist, wenn der Instrumentenaufsatz 2 wie vorgesehen mit der Kupplungseinheit 1 verbunden ist. Auf diese Weise ist für den Instrumentenaufsatz 4 quasi automatisch ein für ein Arbeiten betriebsbereiter Zustand gegeben, wenn der Instrumentenaufsatz 2 mit der Kupplungseinheit 1 verbunden ist.

Weiterhin vorzugsweise ist die Gestaltung derart, dass automatisch die Medienzuführleitung 4 nicht die Flüssigkeit leitend mit der Medienleitung 23 des Instrumentenaufsatzes 2 verbunden ist, wenn der Instrumentenaufsatz 2 nicht wie vorgesehen mit der Kupplungseinheit 1 verbunden ist, also von der Kupplungseinheit 1 getrennt ist, insbesondere durch die Ventilanordnung 6. Auf diese Weise lässt sich insbesondere verhindern, dass Flüssigkeit im Bereich der Kupplungseinheit 1 nach außen bzw. ins Freie austritt, wenn der Instrumentenaufsatz 2 nicht aufgesteckt ist.

Auf diese Weise lässt sich erzielen, dass durch ein Aufstecken des Instrumentenaufsatzes 2 Letzterer ohne Weiteres in einen betriebsbereiten Zustand versetzt wird. Nach Beendigung einer Arbeit, also beispielsweise der Behandlung eines Patienten wird üblicherweise der Instrumentenaufsatz 2 von der Kupplungseinheit 1 abgezogen um ihn hygienisch aufzubereiten; durch die beschriebene Gestaltung befindet sich dann die Anordnung ohne Weiteres in einem Zustand, in dem die Medienzuführleitung 4 - von der Versorgungseinheit 3 bis zu der Schnittstelle zwischen der Kupplungseinheit 1 und dem Instrumentenaufsatz 2 - gespült werden kann, ohne dass hierbei die Flüssigkeit am vorderen Ende 11 der Kupplungseinheit 1 austritt. Die Kupplungseinheit 1 kann dabei vorteilhaft in ihrer Halterung am Arztelement 101 verbleiben.

Vorzugsweise ist die Versorgungseinheit 3 dazu ausgebildet, die Medienzuführleitung 4 und die Medienrückführleitung 5 mit der Flüssigkeit zu spülen. Die Gestaltung kann also insbesondere derart sein, dass nach einem Abziehen des Instrumentenaufsatzes 2 von der Kupplungseinheit 1 Flüssigkeit durch die Medienzuführleitung 4 getrieben wird, so dass Letztere durchgespült wird, insbesondere ausgelöst durch die Mittel zum selektiven Freischalten des Flusses der Flüssigkeit. Insbesondere kann vorgesehen sein, dass hierzu ein entsprechendes Spülprogramm gestartet wird, insbesondere durch Öffnen des Ventils Y2. Beispielsweise kann die Anordnung einen Drucksensor, eine Kamera, einen Scanner oder eine alternative Patientenerkennung aufweisen, mit deren Hilfe das Spülprogramm automatisch gestartet wird. Dies ist auch vorteilhaft mit Bezug auf die Möglichkeit der Dokumentation bzw. Qualitätssicherung. Alternativ kann beispielsweise die Gestaltung auch derart sein, dass das Spülprogramm gestartet wird, wenn nach der Behandlung der Patientenstuhl 103 der Anordnung in eine Aussteige-Position verbracht wird.

Dabei ist die Gestaltung weiterhin vorzugsweise derart, dass die Versorgungseinheit 3 die Flüssigkeit zum Spülen für einen vorgegebenen Zeitraum abgibt oder eine vorgegebene Menge der Flüssigkeit abgibt. So lässt sich erzielen, dass die Spülung "automatisch" mit einer bestimmten gewünschten Qualität durchgeführt wird. Dies ist insbesondere vorteilhaft mit Bezug auf eine Qualitätssicherung bzw. das Qualitätsmanagement.

Weiterhin vorzugsweise ist die Gestaltung dabei außerdem derart, dass die Versorgungseinheit 3 die Menge der zum Spülen abgegebenen Flüssigkeit überwacht. Hierfür kann in bzw. an der Medienrückführleitung 5 ein Volumenstrom-Messgerät, beispielsweise in Form eines Durchfluss-Sensors bzw. Durchfluss-Aufnehmers 51 vorgesehen sein. Auch dies ist besonders vorteilhaft mit Bezug auf eine Qualitätssicherung.

Vorzugsweise erstreckt sich die Medienrückführleitung 5 als Druckleitung bis zur Versorgungseinheit 3 oder einer Entsorgungsstelle 31 zur Entsorgung der Flüssigkeit.

Durch die beschriebene Gestaltung lässt sich somit auch erzielen, dass keine gesonderte Spüleinrichtung erforderlich ist, was insbesondere aus platztechnischen Gründen vorteilhaft ist.

Zudem ist eine "Workflow-Optimierung" erzielbar, da die Tätigkeiten - also beispielsweise das Stecken der betreffenden Versorgungsschläuche in entsprechende Adapter - die zum Spülen bislang vom Praxispersonal durchgeführt werden mussten, nun nicht mehr erforderlich sind.

Selbstverständlich kann die Anordnung - wie in den Figuren 17 bis 19 und auch in den Figuren 1 und 2 als solches beispielhaft skizziert - mehrere entsprechende Kupplungseinheiten und mehrere entsprechende Instrumentenaufsätze umfassen, wobei sich die Instrumentenaufsätze grundsätzlich unterscheiden können. Dabei kann die Gestaltung derart sein, dass sich die Kupplungseinheit 1 wahlweise mit einem der mehreren unterschiedlichen Instrumentenaufsätze verbinden lässt.

Insbesondere in diesem Fall ist die Gestaltung weiterhin besonders bevorzugt derart, dass die Versorgungseinheit 3 in der Lage ist, den Typ des aufgesetzten Instruments, also des aufgesetzten Instrumentenaufsatzes 2 zu erkennen. Insbesondere kann die Versorgungseinheit 3 hierzu mit einer Erkennungseinrichtung zum Erkennen eines Typs des Instrumentenaufsatzes 2 verbunden bzw. ausgestaltet sein.

Mit der beschriebenen Anordnung lässt sich somit insbesondere ein Verfahren zum Spülen des flüssigkeitsführenden Systems der Anordnung durchführen, wobei der dem Instrumentenaufsatz 2 zugewandte Endbereich der Medienzuführleitung 4 mit der Medienrückführleitung 5 verbunden ist und die Flüssigkeit durch die Medienzuführleitung 4 und die damit verbundene Medienrückführleitung 5 gespült wird, wenn der Instrumentenaufsatz 2 nicht an der Kupplungseinheit 1 aufgesetzt ist bzw. nicht wie vorgesehen mit der Kupplungseinheit 1 verbunden ist.

Dabei erfolgt vorzugsweise das Spülen der Flüssigkeit automatisch nach einem Abnehmen bzw. Trennen des Instrumentenaufsatzes 2 von der Kupplungseinheit, also beispielsweise nach einem Abziehen des Instrumentenaufsatzes 2 von dem Kupplungszapfen der Kupplungseinheit 1.

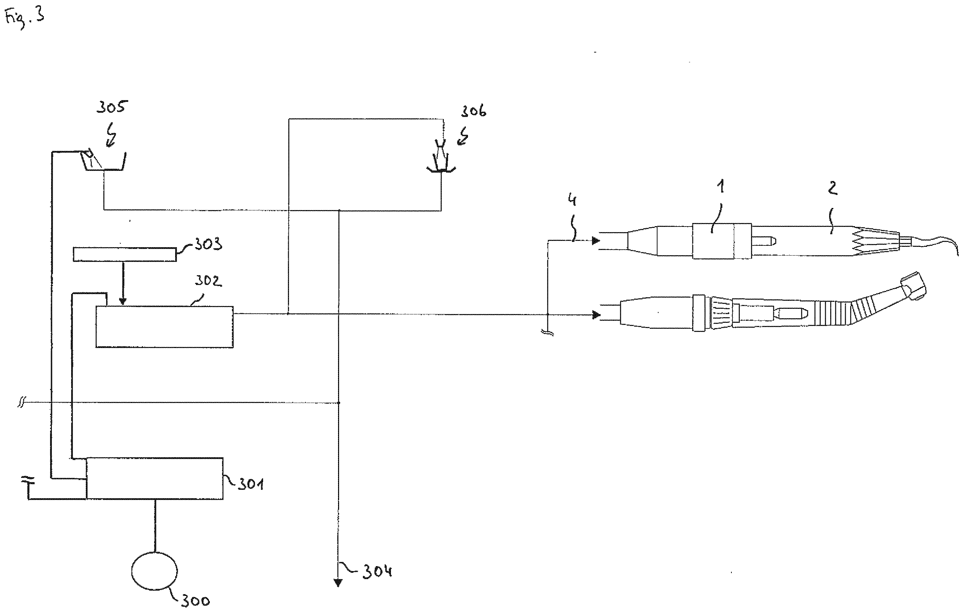

In Fig. 3 ist eine schematische Skizze zu einer möglichen Gestaltung von Medienleitungen der Anordnung gezeigt. Dementsprechend kann die Anordnung einen Hauswasseranschluss für Trinkwasser 300 aufweisen, eine Einheit "Wasseraufschaltung und Filtrierung" 301, eine Einheit "Wasserblock mit freiem Auslauf' 302, eine Einheit "Entkeimungsmittel" 303, einen Abfluss 304, eine Schale 305 und ein Mundglas 306. Die Medienzuführleitung 4 erstreckt sich dabei von der Einheit "Wasserblock mit freiem Auslauf" 302 bis in die Kupplungseinheit 1. Die Einheit "Wasserblock mit freiem Auslauf' 302 kann dabei insbesondere Teil der oben erwähnten Versorgungseinheit 3 darstellen.

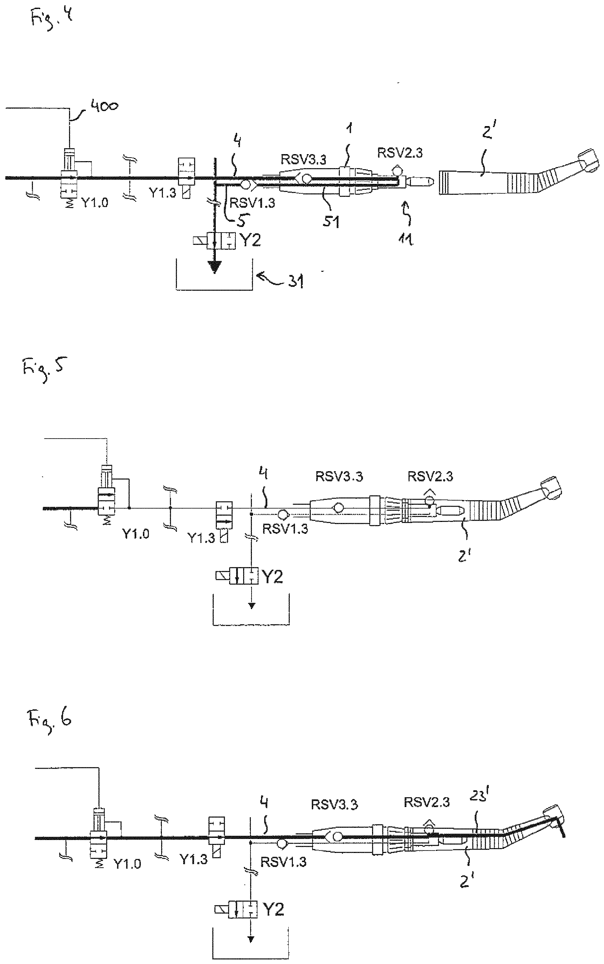

Die Figuren 4, 5 und 6 zeigen - am Beispiel eines Instrumentenaufsatzes 2' in Form einer Turbine - Skizzen zu unterschiedlichen Zuständen der Anordnung mit einer möglichen Gestaltung von Ventilen.

In der Medienzuführleitung 4 kann ein Ventil Y 1.0 vorgesehen sein, das mit einer Steuerluft-Leitung 400 verbunden ist, die beispielsweise mit Hilfe eines (in den Figuren nicht gezeigten) Fußanlassers mit Druckluft beaufschlagt werden kann. Dabei kann insbesondere vorgesehen sein, dass bei einer Betätigung des Fußanlassers die Steuerluft-Leitung mit Druckluft beaufschlagt wird und in der Folge das Ventil Y 1.0 öffnet; durch Beendigung der Betätigung des Fußanlassers schließt sich dann dementsprechend das Ventil Y 1.0 wieder.

Weiterhin kann in der Medienzuführleitung 4 ein Ventil Y 1.3 vorgesehen sein, das beispielsweise durch ein Ablegen der Kupplungseinheit 1 in die dafür vorgesehene Halterung am Arztelement 101 geschlossen wird und durch ein Entnehmen aus der Halterung geöffnet wird.

Weiterhin kann in der Medienzuführleitung 4 innerhalb der Kupplungseinheit 1 ein Rückschlagventil RSV 3.3 vorgesehen sein, das öffnet, wenn die Flüssigkeit - bei geöffneten Ventilen Y 1.0 und Y 1.3 in der Medienzuführleitung 4 seitens der Versorgungseinheit 3 mit Druck beaufschlagt wird bzw. ist.

Weiterhin kann am vorderen Ende 11 der Kupplungseinheit 1 ein Rückschlagventil RSV 2.3 vorgesehen sein, das zwischen der Medienzuführleitung 4 und der Medienleitung 23' des Instrumentenaufsatzes 2' wirkend angeordnet ist und das geöffnet ist, wenn der Instrumentenaufsatz 2' auf der Kupplungseinheit 1 aufgesteckt ist und das geschlossen ist, wenn der Instrumentenaufsatz 2' von der Kupplungseinheit 1 abgenommen bzw. getrennt ist. Wenn das Rückschlagventil RSV 2.3 geöffnet ist, kann die Flüssigkeit - wie in Fig. 6 gezeigt - aus der Medienzuführleitung 4 in die entsprechende Medienleitung 23' des Instrumentenaufsatzes 2' strömen. Beispielsweise kann ein mechanisch wirkender Mechanismus vorgesehen sein, durch den das Rückschlagventil RSV 2.3 automatisch geöffnet wird, wenn der Instrumentenaufsatz 2' auf die Kupplungseinheit 1 aufgesteckt wird und durch den das Rückschlagventil RSV 2.3 automatisch geschlossen wird, wenn der Instrumentenaufsatz 2' von der Kupplungseinheit 1 abgezogen wird. Der mechanisch wirkende Mechanismus kann dabei insbesondere seitens der Kupplungseinheit 1 und/oder seitens des Instrumentenaufsatzes 2' ausgebildet sein.

Das Rückschlagventil RSV 2.3 entspricht in seiner Funktion der in den Figuren 1 und 2 mit dem Bezugszeichen 6 versehenen Ventilanordnung.

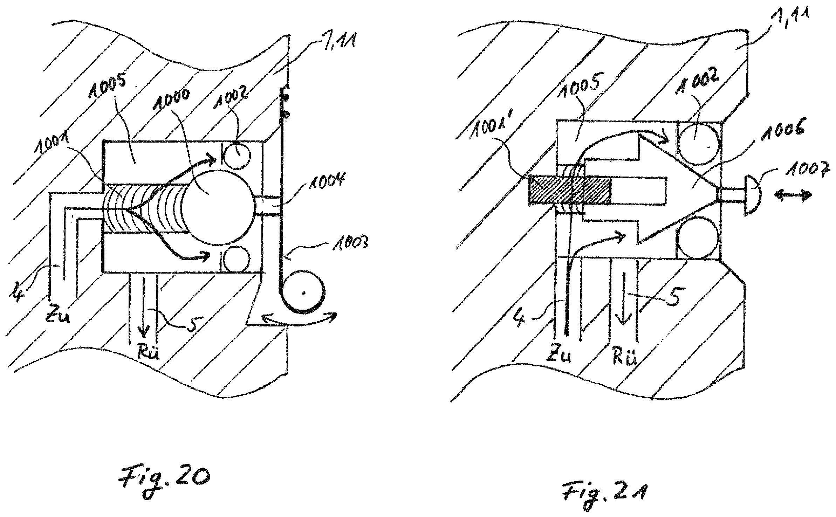

In Fig. 20 ist eine mögliche Gestaltung des Rückschlagventils RSV 2.3 bzw. des Ventils 6 skizziert. Die Skizze zeigt dabei einen Bereich des vorderen Endes 11 der Kupplungseinheit 1 bzw. des Kupplungszapfens, und zwar bei nicht aufgestecktem Instrumentenaufsatz 2. Das Rückschlagventil 6 weist gemäß dieser Ausgestaltung eine Kammer 1005 auf, die einerseits leitend mit der Medienzuführleitung 4 verbunden ist und andererseits mit der Medienrückführleitung 5. In der Kammer 1005 ist eine Kugel 1000 angeordnet, die von einer Druckfeder 1001 gegen einen O-Ring 1002 gedrückt wird, der - bei nicht aufgestecktem Instrumentenaufsatz 2 - den Ausgang der Kammer 1005 bzw. des Rückschlagventils 6 abdichtet. Dieser Zustand ist also beispielsweise beim Spülen gegeben, so dass hierbei die Flüssigkeit durch die Medienzuführleitung 4 in die Kammer 1005 strömt und dann im weiteren Verlauf die Kammer 1005 lediglich durch Eintritt in die Medienrückführleitung 5 wieder verlässt.

Weiterhin umfasst das Ventil 6 einen beispielsweise gebogenen Federdraht 1003, der mit einem Stößel 1004 verbunden ist. Dabei ist die Gestaltung derart, dass beim Aufstecken des Instrumentenaufsatzes 2 auf das vordere Ende 11 der Kupplungseinheit 1 bzw. auf den Kupplungszapfen der Stößel 1004 durch den Federdraht 1003 mit Bezug auf die Kammer 1005 nach innen gedrückt wird, so dass ein Abstand zwischen der Kugel 1000 und dem O-Ring 1002 entsteht und auf diese Weise die Medienleitung 23 des Instrumentenaufsatzes 2 leitend mit der Kammer 1005 verbunden ist. In diesem Zustand ist somit der Weg für die Flüssigkeit aus der Kammer 1005 in den Instrumentenaufsatz 2 bzw. in dessen Medienleitung 23 frei.

Fig. 21 zeigt eine weitere mögliche Gestaltung des Ventils 6, wobei die Bezugszeichen analog gebraucht sind. Bei dieser Gestaltung ist in der Kammer 1005 ein Kegel 1006 angeordnet der - bei nicht aufgestecktem Instrumentenaufsatz 2 - über eine Druckfeder 1001' gegen den O-Ring 1002 gedrückt wird. Der Kegel 1006 ist mit einer Kuppe 1007 verbunden, die beim Aufstecken des Instrumentenaufsatzes 2 einwärts bewegt wird, so dass sich der Kegel 1006 von dem O-Ring 1002 löst und auf diese Weise wiederum der Weg für die Flüssigkeit in den Instrumentenaufsatz 2 freigegeben ist. Zur Führung des Kegels 1006 dient dabei vorzugsweise ein Zylinderstift 1001'.

Weiterhin kann ebenfalls beispielsweise in der Kupplungseinheit 1 ein Rückschlagventil RSV 1.3 in der Medienrückführleitung 5 vorgesehen sein, auf dessen Funktion weiter unten noch eingegangen wird.

Weiterhin kann das Ventil Y2 in der Medienrückführleitung 5 zwischen dem Rückschlagventil RSV 1.3 und der Entsorgungsstelle 31 vorgesehen sein.

In Fig. 4 ist ein Spülzustand skizziert. Bei dieser Ausgestaltung sind im Spülzustand die Ventile Y 1.0 und Y 1.3 geöffnet. Dementsprechend ist die Medienzuführleitung 4 seitens der Versorgungseinheit 3 mit Druck beaufschlagt und folglich auch das Rückschlagventil RSV 3.3 geöffnet. Das Rückschlagventil RSV 2.3 ist geschlossen, da der Instrumentenaufsatz 2' von der Kupplungseinheit 1 getrennt ist. Das Ventil Y2 ist ebenfalls geöffnet und folglich druckbedingt auch das Rückschlagventil RSV 1.3.

In Fig. 5 ist ein Bereitschafts-Zustand skizziert, in dem der Instrumentenaufsatz 2' für eine Arbeit bereit gestellt ist. Der Instrumentenaufsatz 2' ist hierbei bereits auf der Kupplungseinheit 1 aufgesteckt, so dass folglich das Rückschlagventil RSV 2.3 geöffnet ist. Die Kupplungseinheit 1 befindet sich noch in der Halterung und das Ventil Y 1.3 ist dementsprechend geschlossen. Außerdem ist der Fußanlasser noch nicht betätigt, so dass auch das Ventil Y 1.0 noch geschlossen ist. Das Ventil Y2 ist geschlossen und dementsprechend ist auch das Rückschlagventil RSV 1.3 geschlossen.

In Fig. 6 ist ein Arbeitszustand skizziert. Der Instrumentenaufsatz 2' ist aus seiner Halterung genommen, so dass das Ventil Y 1.3 geöffnet ist; der Fußanlasser ist betätigt, so dass das Ventil Y 1.0 geöffnet ist. Das Ventil Y2 ist geschlossen und folglich auch das Rückschlagventil RSV 1.3. Das Rückschlagventil RSV 2.3 ist geöffnet, da der Instrumentenaufsatz 2' auf der Kupplungseinheit 1 aufgesteckt ist. Die Flüssigkeit wird hierbei dementsprechend von der Versorgungseinheit 3 durch die Medienzuführleitung 4 in die Medienleitung 23' des Instrumentenaufsatzes 2' getrieben.

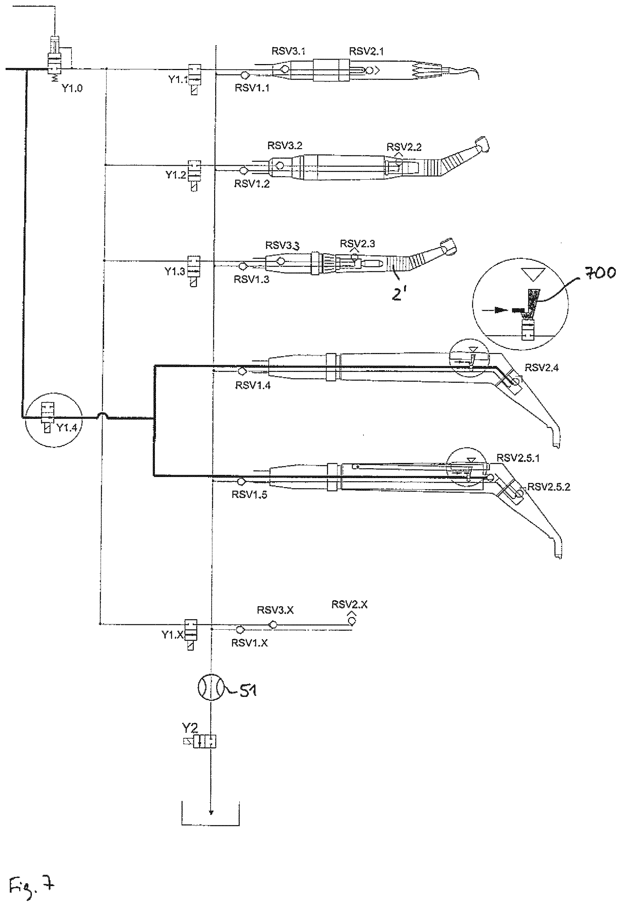

Die Figuren 7 bis 10 zeigen exemplarisch Skizzen zu möglichen unterschiedlichen Zuständen der Anordnung mit mehreren Kupplungseinheiten und mehreren Instrumentenaufsätzen, hier untereinander dargestellt.

In Fig. 7 ist ein Zustand skizziert, in dem sich die Instrumentenaufsätze im Bereitschafts-Zustand befinden. Die Instrumentenaufsätze sind dabei jeweils auf einer Kupplungseinheit aufgesteckt und befinden sich in ihren jeweiligen entsprechenden Halterungen am Arztelement 101. Die an dritter Stelle von oben befindliche Einheit, umfassend die Kupplungsanordnung 1 und den Instrumentenaufsatz 2', entspricht dabei der in den Figuren 4 bis 6 gezeigten Einheit.

Die an erster und zweiter Stelle von oben skizzierten Einheiten sind mit Bezug auf ihre Ventilanordnungen analog zu der an der dritten Stelle gezeigten Einheit ausgestaltet. Dementsprechend sind so Ventile Y 1.1 und Y 1.2 gebildet, die in ihrer Funktion dem Ventil 1.3 entsprechen, Rückschlagventile RSV 3.1 und RSV 3.2, die in ihrer Funktion dem Rückschlagventil RSV 3.3 entsprechen und Rückschlagventile RSV 2.1 und RSV 2.2, die in ihrer Funktion dem Rückschlagventil RSV 2.3 entsprechen. Das Ventil Y 1.0 ist wie gezeigt mit den Ventilen Y 1.1, Y 1.2 und Y 1.3 verbunden.

Die drei obersten Einheiten, also die drei obersten Kupplungseinheiten mit den aufgesteckten Instrumentenaufsätzen befinden sich dabei in einem Zustand, wie er prinzipiell anhand der Fig. 5 oben beschrieben ist. An der vierten und fünften Position von oben gesehen befindet sich jeweils eine Kupplungseinheit mit einem Instrumentenaufsatz in Form einer Spritze. Die entsprechenden Medienzuführleitungen der beiden Spritzen sind dabei über ein Ventil Y 1.4 mit der Versorgungseinheit 3 verbunden, das sich im gezeigten Zustand in geöffneter Stellung befindet. Wie vergrößert in einem Kreis gezeigt, weisen die Spritzen einen Taster 700 mit einer Raste auf, durch dessen Betätigung die betreffende Medienzuführleitung geöffnet bzw. geschlossen werden kann. Die Spritzen weisen außerdem Rückschlagventile RSV 1.4 und RSV 1.5 auf, die in ihrer Funktion dem Rückschlagventil RSV 1.3 entsprechen.

Das Ventil Y2 ist geschlossen und folglich sind die Ventile RSV 1.3, RSV 1.4 und RSV 1.5 ebenfalls geschlossen. Analoges gilt für die weiteren entsprechenden Rückschlagventile RSV 1.1 und RSV 1.2 der beiden obersten Kupplungseinheiten; allgemeiner formuliert sind die Rückschlagventile "RSV 1.X" mit X = 1 ... 5 geschlossen.

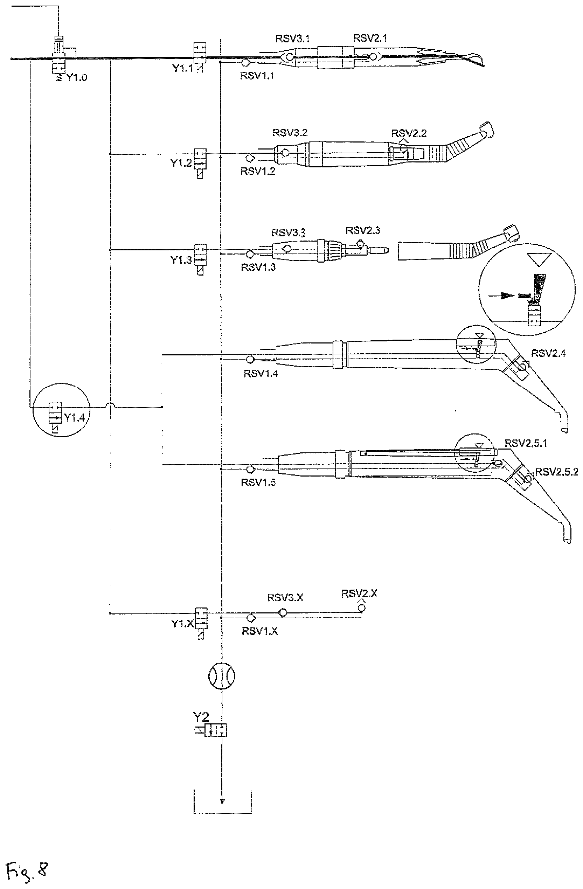

In Fig. 8 ist ein Zustand während einer Behandlung skizziert, in dem die für die Behandlung benötigten Instrumentenaufsätze aufgesteckt sind. Die an oberster Stelle skizzierte Kupplungseinheit ist aus ihrer Halterung entnommen, sodass das entsprechende Ventil Y 1.1 geöffnet ist. Die Kupplungseinheiten an zweiter und dritter Stelle von oben befinden sich in ihren Halterungen, so dass die Ventile Y 1.2 und Y 1.3 geschlossen sind.

Bei der an oberster Stelle skizzierten Einheit ist dabei das Ventil RSV 1.1 - das in seiner Funktion dem in Fig. 4 mit dem Bezugszeichen RSV 1.3 versehenen Ventil entspricht und dem in den Figuren 1 und 2 mit dem Bezugszeichen 6' versehenen Ventil - geschlossen, weil das Ventil Y2 geschlossen ist. Auf diese Weise lässt sich sicherstellend verhindern, dass bei einem Spülen einer Kupplungseinheit oder beim Benutzen einer mit einem Instrumentenaufsatz versehenen Kupplungseinheit die Flüssigkeit an einer weiteren Kupplungseinheit austritt, an der ein Instrumentenaufsatz aufgesteckt ist, wie exemplarisch in Fig. 8 an zweiter Stelle von oben skizziert.

Für die Reihenfolge zur Vorbereitung und beim Start einer Arbeit bzw. Behandlung mit Bezug auf den an oberster Stelle gezeigten Instrumentenaufsatz - hier in Form eines Zahnsteinentfernungsgeräts - gilt:
1) Durch Aufstecken des Instrumentenaufsatzes auf die betreffende Kupplungseinheit öffnet das Rückschlagventil RSV 2.1.
2) Wenn die Kupplungseinheit aus ihrer Halterung genommen wird, öffnet das Ventil Y 1.1.
3) Wenn der Fußanlasser betätigt wird, öffnet das Ventil Y 1.0.
4) Das Rückschlagventil RSV 3.1. öffnet sich daraufhin druckbedingt.

Die Rückschlagventile RSV 1.1 bis RSV 1.5 bzw. RSV 1.X sind geschlossen, da das Ventil Y2 nicht offen ist.

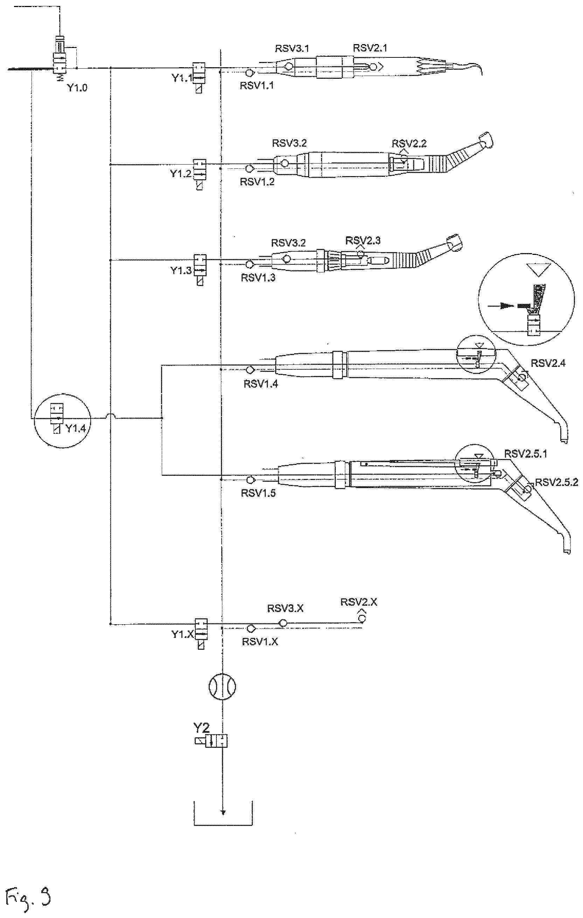

In Fig. 9 ist ein Zustand unmittelbar nach der Behandlung skizziert, in dem die betreffenden Instrumentenaufsätze noch auf ihren Kupplungseinheiten aufgesteckt sind, aber alle Kupplungseinheiten sich in ihren Halterungen befinden.

Für die Reihenfolge beim Beenden der Behandlung mit Bezug auf den an oberster Stelle gezeigten Instrumentenaufsatz gilt:
1) Durch Loslassen des Fußanlassers schließt das Ventil Y 1.0.
2) Der Kolben des Ventils Y 1.0 baut einen Unterdruck auf.
3) Daraufhin schließt das Rückschlagventil RSV 3.1.
4) Durch Ablegen der Kupplungseinheit in die betreffende Halterung schließt das Ventil Y 1.1.

Die Rückschlagventile RSV 1.1 bis RSV 1.5 bzw. RSV 1.X sind noch geschlossen, da das Ventil Y2 noch nicht geöffnet ist.

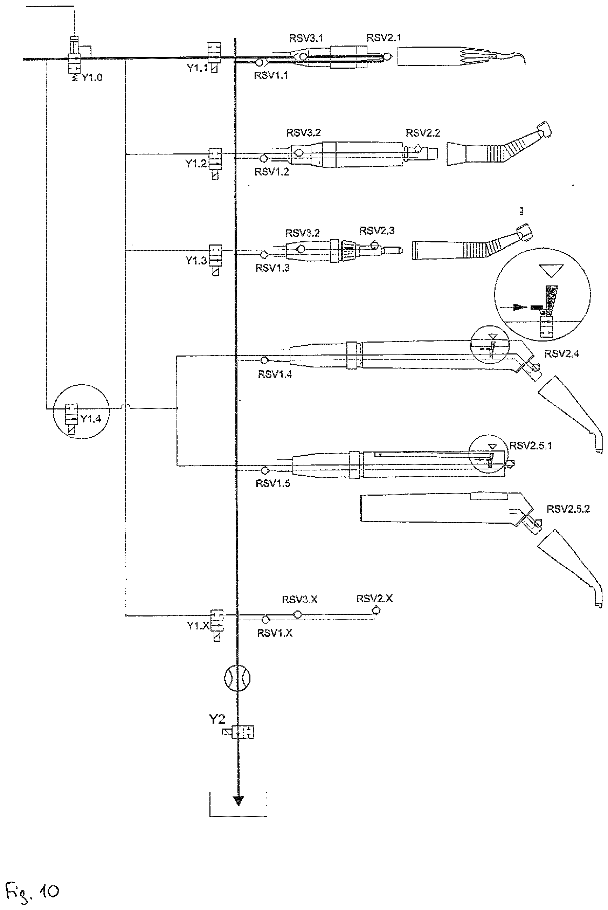

In Fig. 10 ist ein Zustand gezeigt, in dem die Medienzuführleitung zu der an oberster Stelle gezeigten Kupplungseinheit mit der Flüssigkeit durchgespült wird. Für die oberste Einheit entspricht der Zustand damit dem in Fig. 4 gezeigten Zustand.

Für die Reihenfolge beim Spülen mit Bezug auf den an oberster Stelle gezeigten Instrumentenaufsatz gilt:
1) Durch Abnehmen des Instrumentenaufsatzes von der Kupplungseinheit schließt das Rückschlagventil RSV 2.1.
2) Das Ventil Y 2 wird geöffnet, wodurch in der Folge auch das Rückschlagventil RSV 1.1 öffnet.

Die Ventile Y 1.1 und Y 1.0 sind geöffnet.

Im Verlauf des Spülprogramms können die Ventile Y 1.1 bis Y 1.3 bzw. Y 1.X der Reihe nach durchgeschaltet werden, so dass die betreffenden Medienzuführleitungen nacheinander durchgespült werden. Um die Medienzuführleitungen der Spritzen zu spülen wird das Ventil Y 1.0 geschlossen und das Ventil Y 1.4 geöffnet.

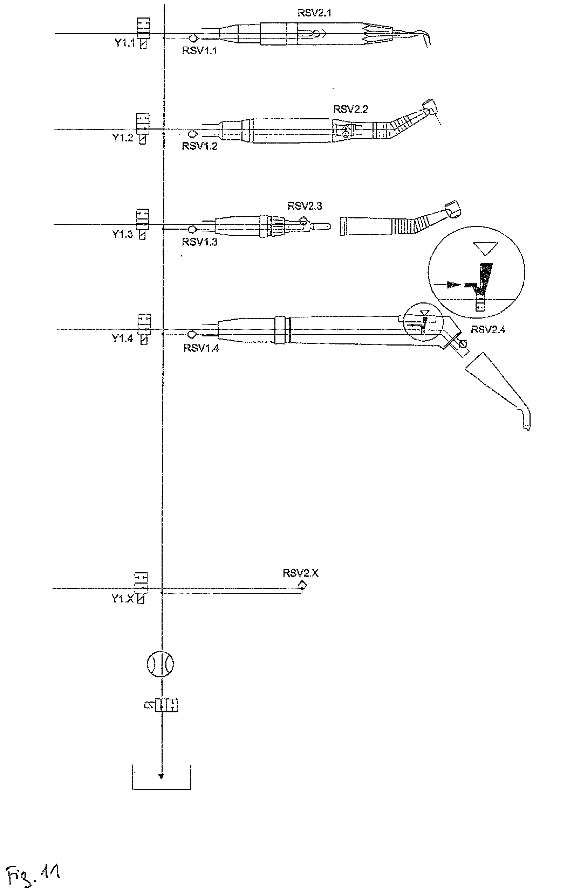

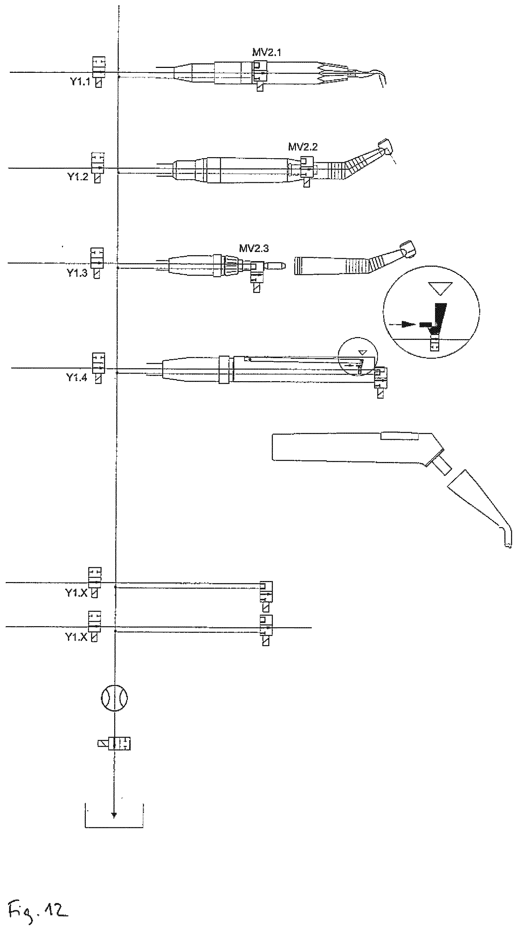

In Fig. 11 ist eine Skizze der Anordnung gezeigt, bei der mit Bezug auf die oberste Einheit die oben beschriebenen Rückschlagventile RSV 1.1 und RSV 2.1 vorgesehen sind. Wie in Fig. 12 skizziert, kann jedoch alternativ anstelle dieser beiden Rückschlagventile auch ein entsprechend gestaltetes Magnetventil MV 2.1 vorgesehen sein. Analoges gilt selbstverständlich für die weiteren Einheiten.

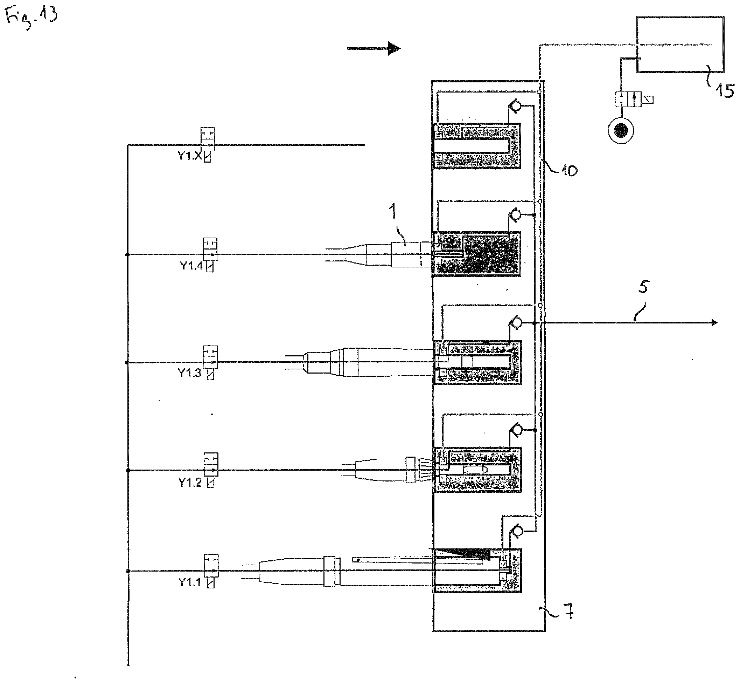

In den Figuren 13 bis 16 sind zwei Skizzen zu einem zweiten Ausführungsbeispiel gezeigt. Die Bezugszeichen sind analog zu oben gebraucht. Soweit im Folgenden nicht anders dargestellt, gelten die obigen Ausführungen sinngemäß bzw. analog auch für das zweite Ausführungsbeispiel.

Bei dem zweiten Ausführungsbeispiel ist ein Spüladapter 7 vorgesehen, der mit der Kupplungseinheit 1 verbunden bzw. gekoppelt werden kann, wenn der Instrumentenaufsatz 2 nicht aufgesetzt bzw. aufgesteckt ist. Dabei erstreckt sich die Medienrückführleitung 5 ausgehend vom Spüladapter 7; dabei ist die sich durch die Kupplungseinheit 1 erstreckenden Medienzuführleitung 4 mit der Medienrückführleitung 5 für die Flüssigkeit leitend verbunden, wenn die Kupplungseinheit 1 an den Spüladapter 7 gekoppelt ist. Vorzugsweise erstreckt sich auch bei dieser Ausführung die Medienrückführleitung 5 durch die Schwenkstangen-Anordnung 107 der Anordnung.

Bei dieser Ausgestaltung wird also nach Beendigung der Behandlung der Instrumentenaufsatz 2 abgezogen und anschließend die Kupplungseinheit 1 wie vorgesehen mit dem Spüladapter 7 verbunden, also mit dem Spüladapter 7 gekuppelt.

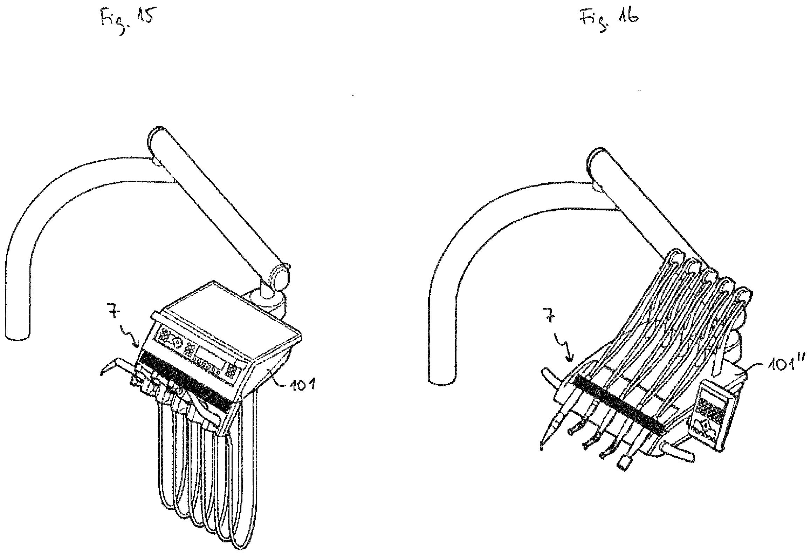

Der Spüladapter 7 ist dabei vorzugsweise - wie in den Fig. 15 skizziert - an dem Arztelement 101 der Anordnung angeordnet. Fig. 16 zeigt eine entsprechende Gestaltung im Fall eines alternativ gebildeten Arztelements 101", bei dem die Versorgungsschläuche - wie insoweit bekannt - ausgehend von den Kupplungseinheiten nicht nach unten, sondern nach oben geführt angeordnet sind. Durch die Anordnung des Spüladapters 7 an dem Arztelement 101 bzw. 101" lässt sich erzielen, dass sich die Kupplungseinheit 1 besonders nahe an dem Spüladapter 7 befindet, wodurch aufgrund der schwenkbaren Anordnung des Arzt- bzw. Assistenzelements 101, 101" eine besonders einfache und ergonomisch vorteilhafte Handhabung beim Ankoppeln der Kupplungseinheit 1 an den Spüladapter 7 ermöglicht ist.

Die Anordnung kann dabei insbesondere mehrere entsprechende, jedoch unterschiedliche Kupplungseinheiten und mehrere entsprechende, jedoch unterschiedliche Instrumentenaufsätze umfassen, wie beispielsweise als solches in Fig. 2 angedeutet, wobei lediglich ein Teil der Instrumentenaufsätze mit einem Teil der Kupplungseinheiten gekuppelt bzw. verbunden werden kann. Dementsprechend weist die Anordnung in diesem Fall vorzugsweise auch mehrere Versorgungsschläuche auf, wobei jeder der Versorgungsschläuche jeweils mit einer der Kupplungseinheiten verbunden ist. Andererseits sind die Versorgungsschläuche mit dem Arztelement 101 verbunden. Dabei sind am Arztelement 101 mehrere entsprechende Halterungen für die Kupplungseinheiten gebildet sein, und zwar jeweils eine Halterung für eine Kupplungseinheit.

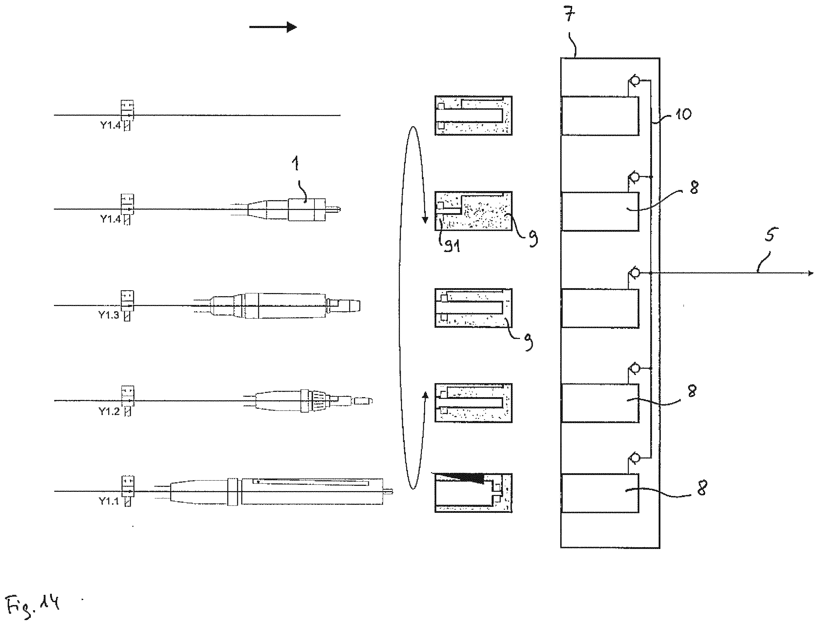

Insbesondere in diesem Fall weist der Spüladapter 7 - wie in den Figuren 13 und 14 skizziert - vorzugsweise mehrere Aufnahmen 8 für Adaptereinsätze 9 auf, die jeweils zur Kopplung mit einer der mehreren unterschiedlichen Kupplungseinheiten ausgebildet sind. Es können also unterschiedliche Adaptereinsätze 9 vorgesehen sein, wobei jeder der Adaptereinsätze 9 zu zumindest einem der unterschiedlichen Kupplungseinheiten korrespondierend bzw. passend gebildet ist.

Dabei ist die Gestaltung vorzugsweise derart, dass die Adaptereinsätze 9 - wie in Fig. 14 durch einen gebogenen Doppelpfeil symbolisiert - in den Aufnahmen 8 frei positionierbar sind, also dass jeder der Adaptereinsätze 9 in jede der Aufnahmen 8 passend eingesetzt werden kann. So lässt sich erzielen, dass die Adaptereinsätze 9 innerhalb des Spüladapters 7 besonders nahe an den Halterungen der jeweils korrespondierenden Kupplungseinheiten platziert werden können. Insbesondere lässt sich auf diese Weise auch erzielen, dass bei der Handhabung des Spüladapters 7 ein Verheddern der Versorgungsschläuche leicht verhindert werden kann.

Durch diese Gestaltung ist sozusagen eine eindeutige Zuordnung der Kupplungseinheiten zu den jeweiligen Adaptereinsätzen 9 ermöglicht. Bei der Handhabung sind lediglich kurze Wege erforderlich. Dies alles ist vorteilhaft mit Bezug auf den "Workflow".

Wie in Fig. 14 angedeutet, kann der Spüladapter 7 eine O-Ring-Pflege und - Desinfektionseinlage 91 aufweisen, die zur Pflege bzw. Desinfektion eines O-Rings der Kupplungseinheit 1 dient. Die O-Ring-Pflege und -Desinfektionseinlage 91 kann insbesondere in dem betreffenden Adaptereinsatz 9 bzw. in mehreren oder allen der Adaptereinsätze 9 entsprechend ausgebildet sein. Die Gestaltung ist dabei derart, dass der betreffende O-Ring nach einem Einstecken der Kupplungseinheit 1 in den Adaptereinsatz 9 gepflegt bzw. desinfiziert werden kann.

Weiterhin vorzugsweise weist der Spüladapter 7 außerdem eine Zuleitung 10 für ein Pflege-, Reinigungs- oder Desinfektionsmittel auf. Im gezeigten Beispiel ist die Zuleitung 10 mit einem Behälter 15 für das Pflege-, Reinigungs- oder Desinfektionsmittel verbunden. Insbesondere kann die Zuleitung 10 zur Zuleitung des Pflege-, Reinigungs- oder Desinfektionsmittels zu der O-Ring-Pflege und - Desinfektionseinlage 91 ausgestaltet sein.

## Patentansprüche

1. Zahnärztliche Kupplungseinheit (1), welche an ihrem vorderen Ende (11) lösbar mit einem Instrumentenaufsatz (2) zur zahnärztlichen Behandlung und/oder Untersuchung koppelbar ist und welche ferner mit einer Versorgungseinheit (3) zur Bereitstellung von Versorgungsmedien für den Instrumentenaufsatz (2) verbindbar ist, wobei die Versorgungsmedien zumindest eine Flüssigkeit umfassen,
wobei sich durch die Kupplungseinheit (1) zu dem Instrumentenaufsatz (2) hin eine Medienzuführleitung (4) für die Flüssigkeit erstreckt und
wobei sich zusätzlich eine Medienrückführleitung (5) durch die Kupplungseinheit (1) erstreckt, welche mit einem dem Instrumentenaufsatz (2) zugewandten Endbereich der sich durch die Kupplungseinheit (1) erstreckenden Medienzuführleitung (4) verbunden ist,
**dadurch gekennzeichnet, dass** die Kupplungseinheit (1) eine Ventilanordnung (6) aufweist, welche in einem aufgesetzten Zustand des Instrumentenaufsatzes (2) die Flüssigkeit von der Kupplungseinheit (1) zu dem Instrumentenaufsatz (2) leitet und
in einem nicht aufgesetzten Zustand des Instrumentenaufsatzes (2) die Flüssigkeit zu der Medienrückführleitung (5) leitet und ein Austreten der Flüssigkeit am vorderen Ende (11) der Kupplungseinheit (1) versperrt.

2. Zahnärztliche Kupplungseinheit nach Anspruch 1,
**dadurch gekennzeichnet,**
**dass** es sich bei der Flüssigkeit um Wasser, behandeltes Wasser oder medizinische oder chemische Flüssigkeit handelt.

3. Zahnärztliche Behandlungs- und/oder Untersuchungsanordnung aufweisend eine zahnärztliche Kupplungseinheit (1) nach Anspruch 1 oder 2, sowie
• die Versorgungseinheit (3),wobei sich die Medienzuführleitung (4) von der Versorgungseinheit (3) durch die Kupplungseinheit (1) zu dem Instrumentenaufsatz (2) hin erstreckt
wobei die zahnärztliche Behandlungs- und/oder Untersuchungsanordnung weiterhin Mittel zum selektiven Freischalten eines Flusses der Flüssigkeit durch die Medienzuführleitung (4) und die Medienrückführleitung (5) aufweist, wobei diese Mittel zum selektiven Freischalten die Ventilanordnung (6) umfassen.

4. Zahnärztliche Behandlungs- und/oder Untersuchungsanordnung nach Anspruch 3,
**dadurch gekennzeichnet,**
**dass** die Mittel zum selektiven Freischalten ferner ein Ventil (Y2) umfassen, das im Bereich der Medienrückführleitung (5) angeordnet ist.

5. Zahnärztliche Behandlungs- und/oder Untersuchungsanordnung aufweisend
- eine zahnärztliche Kupplungseinheit (1) welche an ihrem vorderen Ende lösbar mit einem Instrumentenaufsatz (2) zur zahnärztlichen Behandlung und/oder Untersuchung koppelbar ist,
- eine Versorgungseinheit (3) zur Bereitstellung von Versorgungsmedien für den Instrumentenaufsatz (2), wobei die Versorgungsmedien zumindest eine Flüssigkeit umfassen, sowie
- eine sich von der Versorgungseinheit (3) durch die Kupplungseinheit (1) zu dem Instrumentenaufsatz (2) hin erstreckende Medienzuführleitung (4) für die Flüssigkeit,
- eine Medienrückführleitung (5), welche mit einem dem Instrumentenaufsatz (2) zugewandten Endbereich der sich durch die Kupplungseinheit (1) erstreckenden Medienzuführleitung (4) verbindbar ist,
wobei die zahnärztliche Behandlungs- und/oder Untersuchungsanordnung weiterhin Mittel zum selektiven Freischalten eines Flusses der Flüssigkeit durch die Medienzuführleitung (4) und die Medienrückführleitung (5) aufweist,
- einen Spüladapter (7), der im nicht aufgesetzten Zustand des Instrumentenaufsatzes (2) an der Kupplungseinheit (1) mit dieser koppelbar ist,
wobei sich von dem Spüladapter (7) ausgehend die Medienrückführleitung (5) erstreckt, welche im gekoppelten Zustand zwischen Spüladapter (7) und Kupplungseinheit (1) mit der sich durch die Kupplungseinheit (1) erstreckenden Medienzuführleitung (4) verbunden ist,
**dadurch gekennzeichnet**
**dass** der Spüladapter (7) Aufnahmen (8) für Adaptereinsätze (9) aufweist, welche jeweils zur Kopplung mit einer Kupplungseinheit ausgebildet sind, wobei die Adaptereinsätze (9) in den Aufnahmen (8) frei positionierbar sind.

6. Zahnärztliche Behandlungs- und/oder Untersuchungsanordnung nach Anspruch 5,
**dadurch gekennzeichnet,**
**dass** der Spüladapter (7) an einem Arzt- oder Assistenzelement (101) der Behandlungs- und/oder Untersuchungsanordnung angeordnet ist.

7. Zahnärztliche Behandlungs- und/oder Untersuchungsanordnung nach Anspruch 5 oder 6,
**dadurch gekennzeichnet,**
**dass** der Spüladapter (7) zusätzlich eine Zuleitung (10) für ein Pflege-, Reinigungs- oder Desinfektionsmittel aufweist.

8. Zahnärztliche Behandlungs- und/oder Untersuchungsanordnung nach einem der Ansprüche 3 bis 7,
**dadurch gekennzeichnet,**
**dass** die Versorgungseinheit (3) dazu ausgebildet ist, die Medienzuführleitung (4) und die Medienrückführleitung (5) mit der Flüssigkeit zu spülen,
wobei vorzugsweise die Versorgungseinheit (3) die Flüssigkeit zum Spülen für einen vorgegebenen Zeitraum abgibt oder eine vorgegebene Menge der Flüssigkeit abgibt.

9. Zahnärztliche Behandlungs- und/oder Untersuchungsanordnung nach einem der Ansprüche 3 bis 8,
**dadurch gekennzeichnet,**
**dass** sich die Medienrückführleitung (5) als Druckleitung bis zur Versorgungseinheit (3) oder einer Entsorgungsstelle (31) erstreckt.

10. Zahnärztliche Behandlungs- und/oder Untersuchungsanordnung nach einem der Ansprüche 3 bis 9,
**dadurch gekennzeichnet,**
**dass** es sich bei dem Instrumentenaufsatz (2) um ein Bohrhandstück, ein Zahnsteinentfernungsgerät oder ein zahnärztliches Spritzhandstück handelt.

11. Zahnärztliche Behandlungs- und/oder Untersuchungsanordnung nach einem der Ansprüche 3 bis 10,
**dadurch gekennzeichnet,**
**dass** diese zusätzlich einen Versorgungsschlauch (105) aufweist, über den die Kupplungseinheit (1) lösbar oder fest mit der Versorgungseinheit (3) verbunden ist, wobei sich die Medienzuführleitung (3) und vorzugsweise auch die Medienrückführleitung (5) durch den Versorgungsschlauch (105) erstrecken.

12. Verfahren zum Spülen des flüssigkeitführenden Systems einer zahnärztlichen Behandlungs- und/oder Untersuchungsanordnung, wobei die Behandlungs- und/oder Untersuchungsanordnung aufweist:
• eine zahnärztliche Kupplungseinheit (1) welche an ihrem vorderen Ende (11) lösbar mit einem Instrumentenaufsatz (2) zur zahnärztlichen Behandlung und/oder Untersuchung koppelbar ist,
• eine Versorgungseinheit (3) zur Bereitstellung von Versorgungsmedien für den Instrumentenaufsatz (2), wobei die Versorgungsmedien zumindest eine Flüssigkeit umfassen, sowie
• eine sich von der Versorgungseinheit (3) durch die Kupplungseinheit (1) zu dem Instrumentenaufsatz (2) hin erstreckende Medienzuführleitung (4) für die Flüssigkeit,
aufweisend die Schritte:
a) Leiten der Flüssigkeit von der Kupplungseinheit (1) zu dem Instrumentenaufsatz (2) in einem aufgesetzten Zustand des Instrumentenaufsatzes (2) an der Kupplungseinheit (1),
b) Spülen der Flüssigkeit durch die Medienzuführleitung (4) und eine damit verbundene Medienrückführleitung (5) in einem nicht aufgesetzten Zustand des Instrumentenaufsatzes (2) an der Kupplungseinheit (1).

13. Verfahren nach Anspruch 12,
**dadurch gekennzeichnet,**
**dass** sich die Medienrückführleitung (5) vorzugsweise als Druckleitung von einem Spüladapter (7) ausgehend erstreckt, mit dem die Kupplungseinheit (1) in Schritt b) verbunden wird.

14. Verfahren nach Anspruch 12,
weiterhin aufweisend den Schritt
c) Öffnen einer Ventilanordnung (6) der Kupplungseinheit (1) durch Aufsetzen des Instrumentenaufsatzes (2) auf die Kupplungseinheit (1), wobei bei geöffneter Ventilanordnung (6) die Medienzuführleitung (4) leitend mit einer Medienleitung (23) des Instrumentenaufsatzes (2) verbunden ist.

15. Verfahren nach Anspruch 14,
weiterhin aufweisend den Schritt
d) Schließen der Ventilanordnung (6) durch Abziehen des Instrumentenaufsatzes (2) von der Kupplungseinheit (1), wobei bei geschlossener Ventilanordnung (6) ein Austreten der Flüssigkeit am vorderen Ende (11) der Kupplungseinheit (1) versperrt ist.

16. Verfahren nach einem der Ansprüche 12, 14, 15,
weiterhin aufweisend den Schritt
e) Anlegen eines Überdrucks an die Medienzuführleitung (4), wobei vorzugsweise durch den angelegten Überdruck ein in der Medienrückführleitung (5) angeordnetes Rückschlagventil (6') geöffnet wird.

## Claims

1. Dental coupling unit (1) which can be releasably coupled at its front end (11) to an instrument attachment (2) for dental treatment and/or examination and which can moreover be connected to a supply unit (3) for providing supply media for the instrument attachment (2), wherein the supply media comprise at least one liquid, wherein a media delivery line (4) for the liquid extends through the coupling unit (1) towards the instrument attachment (2), and wherein additionally a media return line (5) extends through the coupling unit (1), which media return line (5) is connected to an end region of the media delivery line (4) extending through the coupling unit (1), said end region facing the instrument attachment (2), **characterized in that** the coupling unit (1) has a valve arrangement (6) which conducts the liquid from the coupling unit (1) to the instrument attachment (2) when the instrument attachment (2) is fitted and conducts the liquid to the media return line (5) and blocks an escape of the liquid at the front end (11) of the coupling unit (1) when the instrument attachment (2) is not fitted.

2. Dental coupling unit according to Claim 1, **characterized in that** the liquid is water, treated water or medical or chemical liquid.

3. Dental treatment and/or examination assembly having a dental coupling unit (1) according to Claim 1 or 2, and
• the supply unit (3), wherein the media delivery line (4) extends from the supply unit (3) through the coupling unit (1) towards the instrument attachment (2),
wherein the dental treatment and/or examination assembly moreover has means for selectively enabling a flow of the liquid through the media delivery line (4) and the media return line (5), wherein these means for selective enabling comprise the valve arrangement (6).

4. Dental treatment and/or examination assembly according to Claim 3, **characterized in that** the means for selective enabling moreover comprise a valve (Y2), which is arranged in the region of the media return line (5).

5. Dental treatment and/or examination assembly having
- a dental coupling unit (1) which can be releasably coupled at its front end to an instrument attachment (2) for dental treatment and/or examination,
- a supply unit (3) for providing supply media for the instrument attachment (2), wherein the supply media comprise at least one liquid, and
- a media delivery line (4) for the liquid which extends from the supply unit (3) through the coupling unit (1) towards the instrument attachment (2),
- a media return line (5) which can be connected to an end region of the media delivery line (4) extending through the coupling unit (1), said end region facing the instrument attachment (2),
wherein the dental treatment and/or examination assembly moreover has means for selectively enabling a flow of the liquid through the media delivery line (4) and the media return line (5),
- a flushing adapter (7), which can be coupled to the coupling unit (1) when the instrument attachment (2) is not fitted to the latter,
wherein the media return line (5) extends starting from the flushing adapter (7) and, in the coupled state between flushing adapter (7) and coupling unit (1), is connected to the media delivery line (4) extending through the coupling unit (1),
**characterized in that** the flushing adapter (7) has seats (8) for adapter inserts (9) which are each designed for coupling to a coupling unit, wherein the adapter inserts (9) can be freely positioned in the seats (8).

6. Dental treatment and/or examination assembly according to Claim 5, **characterized in that** the flushing adapter (7) is arranged on a dentist's or dental assistant's element (101) of the treatment and/or examination assembly.

7. Dental treatment and/or examination assembly according to Claim 5 or 6, **characterized in that** the flushing adapter (7) additionally has a feed line (10) for a treatment agent, cleaning agent or disinfecting agent.

8. Dental treatment and/or examination assembly according to one of Claims 3 to 7, **characterized in that** the supply unit (3) is designed to flush the media delivery line (4) and the media return line (5) with the liquid, wherein the supply unit (3) preferably dispenses the flushing liquid for a predefined period of time or dispenses a predefined quantity of the liquid.

9. Dental treatment and/or examination assembly according to one of Claims 3 to 8, **characterized in that** the media return line (5) extends as a pressure line as far as the supply unit (3) or a discharge location (31).

10. Dental treatment and/or examination assembly according to one of Claims 3 to 9, **characterized in that** the instrument attachment (2) is a drill handpiece, a device for removing tartar or a dental spray handpiece.

11. Dental treatment and/or examination assembly according to one of Claims 3 to 10, **characterized in that** it additionally has a supply hose (105) via which the coupling unit (1) is connected releasably or permanently to the supply unit (3), wherein the media delivery line (3) and preferably also the media return line (5) extend through the supply hose (105).

12. Method for flushing the liquid-conducting system of a dental treatment and/or examination assembly, wherein the treatment and/or examination assembly has:
• a dental coupling unit (1) which can be releasably coupled at its front end (11) to an instrument attachment (2) for dental treatment and/or examination,
• a supply unit (3) for providing supply media for the instrument attachment (2), wherein the supply media comprise at least one liquid, and
• a media delivery line (4) for the liquid, which extends from the supply unit (3) through the coupling unit (1) towards the instrument attachment (2),
said method having the steps of:
a) conducting the liquid from the coupling unit (1) to the instrument attachment (2) when the instrument attachment (2) is fitted to the coupling unit (1),
b) flushing the liquid through the media delivery line (4) and through a media return line (5) connected to the latter when the instrument attachment (2) is not fitted to the coupling unit (1).

13. Method according to Claim 12, **characterized in that** the media return line (5) preferably extends as a pressure line starting from a flushing adapter (7) to which the coupling unit (1) is connected in step b).

14. Method according to Claim 12, moreover having the step of:
c) opening a valve arrangement (6) of the coupling unit (1) by fitting the instrument attachment (2) to the coupling unit (1), wherein the media delivery line (4) is connected in a conducting manner to a media line (23) of the instrument attachment (2) when the valve arrangement (6) is opened.

15. Method according to Claim 14, moreover having the step of:
d) closing the valve arrangement (6) by withdrawing the instrument attachment (2) from the coupling unit (1), wherein an escape of the liquid at the front end (11) of the coupling unit (1) is blocked when the valve arrangement (6) is closed.

16. Method according to one of Claims 12, 14, 15, moreover having the step of:
e) applying an overpressure to the media delivery line (4), wherein preferably a check valve (6') arranged in the media return line (5) is opened by the applied overpressure.

## Revendications

1. Unité d'accouplement dentaire (1) qui peut être accouplée au niveau de son extrémité avant (11) de manière détachable à une pièce d'instrument (2) pour le traitement et/ou l'examen dentaire, et qui peut en outre être connectée à une unité d'alimentation (3) destinée à l'alimentation de milieux à la pièce d'instrument (2), les milieux alimentés comprenant au moins un liquide,
une conduite d'alimentation en milieu (4) pour le liquide s'étendant à travers l'unité d'accouplement (1) jusqu'à la pièce d'instrument (2) et
une conduite de retour de milieu (5) s'étendant en outre à travers l'unité d'accouplement (1), laquelle est connectée par une région d'extrémité tournée vers la pièce d'instrument (2) à la conduite d'alimentation en milieu (4) s'étendant à travers l'unité d'accouplement (1),
**caractérisée en ce que**
l'unité d'accouplement (1) présente un agencement de soupape (6) qui, dans un état monté de la pièce d'instrument (2), conduit le liquide depuis l'unité d'accouplement (1) jusqu'à la pièce d'instrument (2) et
dans un état non monté de la pièce d'instrument (2), conduit le liquide jusqu'à la conduite de retour de milieu (5) et empêche le liquide de sortir au niveau de l'extrémité avant (11) de l'unité d'accouplement (1) .

2. Unité d'accouplement dentaire selon la revendication 1,
**caractérisée en ce que**
le liquide est de l'eau, de l'eau traitée ou un liquide médical ou chimique.

3. Agencement de traitement et/ou d'examen dentaire, présentant une unité d'accouplement dentaire (1) selon la revendication 1 ou 2, ainsi que
- l'unité d'alimentation (3), la conduite d'alimentation en milieu (4) s'étendant depuis l'unité d'alimentation (3) à travers l'unité d'accouplement (1) jusqu'à la pièce d'instrument (2),
l'agencement de traitement et/ou d'examen dentaire présentant en outre des moyens pour la libération sélective d'un flux de liquide à travers la conduite d'alimentation en milieu (4) et la conduite de retour de milieu (5), ces moyens de libération sélective comprenant l'agencement de soupape (6).

4. Agencement de traitement et/ou d'examen dentaire selon la revendication 3,
**caractérisé en ce que**
les moyens de libération sélective comprennent en outre une soupape (Y2) qui est disposée dans la région de la conduite de retour de milieu (5).

5. Agencement de traitement et/ou d'examen dentaire présentant :
- une unité d'accouplement dentaire (1) qui peut être accouplée au niveau de son extrémité avant de manière détachable à une pièce d'instrument (2) pour le traitement et/ou l'examen dentaire,
- une unité d'alimentation (3) destinée à l'alimentation de milieux à la pièce d'instrument (2), les milieux alimentés comprenant au moins un liquide,
- une conduite d'alimentation en milieu (4) pour le liquide, s'étendant depuis l'unité d'alimentation (3) à travers l'unité d'accouplement (1) jusqu'à la pièce d'instrument (2) et
- une conduite de retour de milieu (5) qui peut être connectée par une région d'extrémité tournée vers la pièce d'instrument (2) à la conduite d'alimentation en milieu (4) s'étendant à travers l'unité d'accouplement (1),
l'agencement de traitement et/ou d'examen dentaire présentant en outre des moyens de libération sélective d'un flux de liquide à travers la conduite d'alimentation en milieu (4) et la conduite de retour de milieu (5),
- un adaptateur de rinçage (7) qui peut être accouplé à l'unité d'accouplement (1) dans l'état non monté de la pièce d'instrument (2) sur celle-ci,
- la conduite de retour de milieu (5) s'étendant depuis l'adaptateur de rinçage (7), et étant connectée, dans l'état accouplé entre l'adaptateur de rinçage (7) et l'unité d'accouplement (1), à la conduite d'alimentation en milieu (4) s'étendant à travers l'unité d'accouplement (1),
**caractérisé en ce que**
l'adaptateur de rinçage (7) présente des logements (8) pour des inserts d'adaptateur (9) qui sont réalisés dans chaque cas pour l'accouplement à une unité d'accouplement, les inserts d'adaptateur (9) pouvant être positionnés librement dans les logements (8) .

6. Agencement de traitement et/ou d'examen dentaire selon la revendication 5,
**caractérisé en ce que**
l'adaptateur de rinçage (7) est disposé sur un élément médical ou d'assistance (101) de l'agencement de traitement et/ou d'examen.

7. Agencement de traitement et/ou d'examen dentaire selon la revendication 5 ou 6,
**caractérisé en ce que**
l'adaptateur de rinçage (7) présente en outre une conduite d'alimentation (10) pour un agent de soin, de nettoyage ou de désinfection.

8. Agencement de traitement et/ou d'examen dentaire selon l'une quelconque des revendications 3 à 7,
**caractérisé en ce que**
l'unité d'alimentation (3) est réalisée de manière à rincer la conduite d'alimentation en milieu (4) et la conduite de retour de milieu (5) avec le liquide, l'unité d'alimentation (3) délivrant le liquide de rinçage pendant une période prédéfinie ou délivrant une quantité prédéfinie de liquide.

9. Agencement de traitement et/ou d'examen dentaire selon l'une quelconque des revendications 3 à 8,
**caractérisé en ce que**
la conduite de retour de milieu (5), en tant que conduite sous pression, s'étend jusqu'à l'unité d'alimentation (3) ou jusqu'à une zone de décharge (31) .

10. Agencement de traitement et/ou d'examen dentaire selon l'une quelconque des revendications 3 à 9,
**caractérisé en ce que**
la pièce d'instrument (2) est une fraise à main, un appareil de détartrage ou une pièce de jet manuelle dentaire.

11. Agencement de traitement et/ou d'examen dentaire selon l'une quelconque des revendications 3 à 10,
**caractérisé en ce que**
celui-ci présente en outre un tuyau d'alimentation (105) par le biais duquel l'unité d'accouplement (1) est connectée de manière amovible ou fixe à l'unité d'alimentation (3), la conduite d'alimentation en milieu (3) et de préférence également la conduite de retour de milieu (5) s'étendant à travers le tuyau d'alimentation (105).

12. Procédé pour le rinçage du système de transport de liquide d'un agencement de traitement et/ou d'examen dentaire, l'agencement de traitement et/ou d'examen dentaire présentant :
- une unité d'accouplement dentaire (1) qui peut être accouplée au niveau de son extrémité avant (11) de manière détachable à une pièce d'instrument (2) pour le traitement et/ou l'examen dentaire,
- une unité d'alimentation (3) destinée à l'alimentation de milieux à la pièce d'instrument (2), les milieux alimentés comprenant au moins un liquide, et
- une conduite d'alimentation en milieu (4) pour le liquide, s'étendant depuis l'unité d'alimentation (3) à travers l'unité d'accouplement (1) jusqu'à la pièce d'instrument (2),
le procédé présentant les étapes suivantes :
a) transport du liquide depuis l'unité d'accouplement (1) jusqu'à la pièce d'instrument (2) dans un état monté de la pièce d'instrument (2) sur l'unité d'accouplement (1),
b) rinçage avec le liquide à travers la conduite d'alimentation en milieu (4) et une conduite de retour de milieu (5) connectée à celle-ci dans un état non monté de la pièce d'instrument (2) sur l'unité d'accouplement (1).

13. Procédé selon la revendication 12,
**caractérisé en ce que**
la conduite de retour de milieu (5) s'étend de préférence en tant que conduite sous pression depuis un adaptateur de rinçage (7) avec lequel l'unité d'accouplement (1) est connectée à l'étape b).

14. Procédé selon la revendication 12,
présentant en outre l'étape suivante :
c) ouverture d'un agencement de soupape (6) de l'unité d'accouplement (1) en installant la pièce d'instrument (2) sur l'unité d'accouplement (1), la conduite d'alimentation en milieu (4) étant connectée fluidiquement à une conduite de milieu (23) de la pièce d'instrument (2) lorsque l'agencement de soupape (6) est ouvert.

15. Procédé selon la revendication 14,
présentant en outre l'étape suivante :
d) fermeture de l'agencement de soupape (6) en retirant la pièce d'instrument (2) de l'unité d'accouplement (1), une sortie du liquide au niveau de l'extrémité avant (11) de l'unité d'accouplement (1) étant empêchée lorsque l'agencement de soupape (6) est fermé.

16. Procédé selon l'une quelconque des revendications 12, 14, 15,
présentant en outre l'étape suivante :
e) application d'une surpression à la conduite d'alimentation en milieu (4), un clapet antiretour (6') disposé dans la conduite de retour de milieu (5) étant de préférence ouvert par l'application de la surpression.
